(19) Europäisches Patentamt / European Patent Office / Office européen des brevets

(11) **EP 3 460 742 A1**

(12) **EUROPEAN PATENT APPLICATION**
published in accordance with Art. 153(4) EPC

(43) Date of publication:
**27.03.2019 Bulletin 2019/13**

(21) Application number: **17799012.4**

(22) Date of filing: **23.03.2017**

(51) Int Cl.:
*G06Q 50/06* (2012.01)   *G06F 19/00* (2018.01)
*H02J 3/00* (2006.01)   *H02J 13/00* (2006.01)

(86) International application number:
**PCT/JP2017/011638**

(87) International publication number:
**WO 2017/199578 (23.11.2017 Gazette 2017/47)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **20.05.2016 JP 2016101896**

(71) Applicant: **Hitachi, Ltd.**
**Tokyo 100-8280 (JP)**

(72) Inventors:
• **OKAMOTO, Yoshihisa**
**Tokyo 100-8280 (JP)**

• **WATANABE, Tohru**
**Tokyo 100-8280 (JP)**
• **UTSUMI, Masato**
**Tokyo 100-8280 (JP)**
• **SHIGEMORI, Ikuo**
**Tokyo 100-8280 (JP)**
• **IIMURA, Hiroshi**
**Tokyo 100-8280 (JP)**
• **GOTOUDA, Nobuhiro**
**Tokyo 100-8280 (JP)**

(74) Representative: **Mewburn Ellis LLP**
**City Tower**
**40 Basinghall Street**
**London EC2V 5DE (GB)**

(54) **DEMAND FORECAST SYSTEM AND DEMAND FORECAST METHOD**

(57)     To improve a prediction accuracy of future demand. A demand prediction system includes a storage device and a processor which is connected to the storage device. The processor is configured to associate time-sequential load data of a resource demand of a plurality of consumers in a consumer set to a plurality of groups, and the storage device is configured to acquire demand pattern data indicating a shape representing the load data in each group and the number of consumers belonging to each group, and calculate shape data indicating a shape of the time-sequential load data of the demand of the consumer set in a predetermined prediction target period on the basis of a record value of the demand pattern data of each group and a record value of the number of consumers of each group.

FIG. 5

## Description

Technical Field

The present invention relates to a demand prediction system.

Background Art

There is a request for predicting a demand for resources in supplying the resources (power, gas, negawatt, water, hot/cold water, and vehicles for passenger transportation, vehicles for freight transportation, water, hot/cold water, and vehicles for passenger transportation, vehicles for freight transportation). For example, as the power companies are reorganized for separation of electrical power production from power distribution and transmission, power selling solution to make management of the power company efficient is required. In the power selling, there is required medium-term or long-term predictions of demand in order to optimize the relative contracts with power plants (capacity securing).

For example, PTL 1 discloses a power load estimation method in which a reference load pattern is created for each consumer type which is classified by a contract type or a business type, and the reference load pattern is expanded or reduced according to power consumption per month of each consumer type. Therefore, the power load for each consumer type can be predicted.

Citation List

Patent Literature

PTL 1: JP 2004-320963 A

Summary of Invention

Technical Problem

However, in the power load estimation method disclosed in PTL 1, the consumers having the same contract type and the same business type are assumed to be similar in a demand pattern, but the demand pattern may be different even though the contract type or the business type is the same. Therefore, the power load of each demand type may be not predicted with accuracy, and thus the medium-term or long-term prediction of demand may be not accurate.

Solution to Problem

In order to solve the above problems, a demand prediction system according to an aspect of the invention includes a storage device and a processor which is connected to the storage device. The processor is configured to associate time-sequential load data of a resource demand of a plurality of consumers in a consumer set to a plurality of groups, and the storage device is configured to acquire demand pattern data indicating a shape representing the load data in each group and the number of consumers belonging to each group, and calculate shape data indicating a shape of the time-sequential load data of the demand of the consumer set in a predetermined prediction target period on the basis of a record value of the demand pattern data of each group and a record value of the number of consumers of each group.

Advantageous Effects of Invention

According to the invention, it is possible to improve the prediction accuracy of future demand.

Brief Description of Drawings

[FIG. 1] FIG. 1 is a diagram illustrating the entire configuration of a demand prediction system.
[FIG. 2] FIG. 2 is a block diagram illustrating a schematic configuration of an annual demand estimation device.
[FIG. 3] FIG. 3 is a block diagram illustrating a schematic configuration of a demand situation classification device.
[FIG. 4] FIG. 4 is a block diagram illustrating a schematic configuration of a prediction calculation device.
[FIG. 5] FIG. 5 is a block diagram illustrating a series of processing flow performed in the demand prediction system.

[FIG. 6] FIG. 6 is a conceptual diagram illustrating a schematic configuration of meter data information.

[FIG. 7] FIG. 7 is a conceptual diagram illustrating a schematic configuration of consumer information.

[FIG. 8] FIG. 8 is a conceptual diagram illustrating a schematic configuration of cluster information.

[FIG. 9] FIG. 9 is a conceptual diagram illustrating a schematic configuration of group information.

[FIG. 10] FIG. 10 is a flowchart illustrating a processing procedure of an annual demand estimation process.

[FIG. 11] FIG. 11 is a flowchart illustrating a processing procedure of a cluster analysis process.

[FIG. 12] FIG. 12 is a flowchart illustrating a processing procedure of a classification process.

[FIG. 13] FIG. 13 is a flowchart illustrating a processing procedure of a cluster number validity evaluation value calculation process.

[FIG. 14] FIG. 14 is a flowchart illustrating a processing procedure of an optimal cluster number determination process.

[FIG. 15] FIG. 15 is a diagram illustrating characteristic curves for describing the optimal cluster number determination process.

[FIG. 16] FIG. 16 is a flowchart illustrating a processing procedure of a group generation process.

[FIG. 17] FIG. 17 is a conceptual diagram for describing the group generation process.

[FIG. 18] FIG. 18 is a flowchart illustrating a processing procedure of a consumer number annual change prediction process.

[FIG. 19] FIG. 19 is a conceptual diagram for describing the consumer number annual change prediction process.

[FIG. 20] FIG. 20 is a flowchart illustrating a processing procedure of a demand situation annual change prediction process.

[FIG. 21] FIG. 21 is a conceptual diagram for describing the demand situation annual change prediction process.

[FIG. 22] FIG. 22 is a flowchart illustrating a processing procedure of a demand situation extension correction process.

[FIG. 23] FIG. 23 is a flowchart illustrating a processing procedure of a demand situation synthesis process.

[FIG. 24] FIG. 24 is a flowchart illustrating a processing procedure of a parameter adjustment process.

[FIG. 25] FIG. 25 is a conceptual diagram for describing a demand prediction for each pole transformer.

[FIG. 26] FIG. 26 is a conceptual diagram illustrating a prediction error between a power record amount and an estimated power amount of each pole transformer.

[FIG. 27] FIG. 27 is a conceptual diagram for describing the demand situation extension correction process.

[FIG. 28] FIG. 28 is a flowchart illustrating a processing procedure of calculating a power prediction amount.

Description of Embodiments

Hereinafter, embodiments of the invention will be described in detail with reference to the drawings.

(1) Entire Configuration

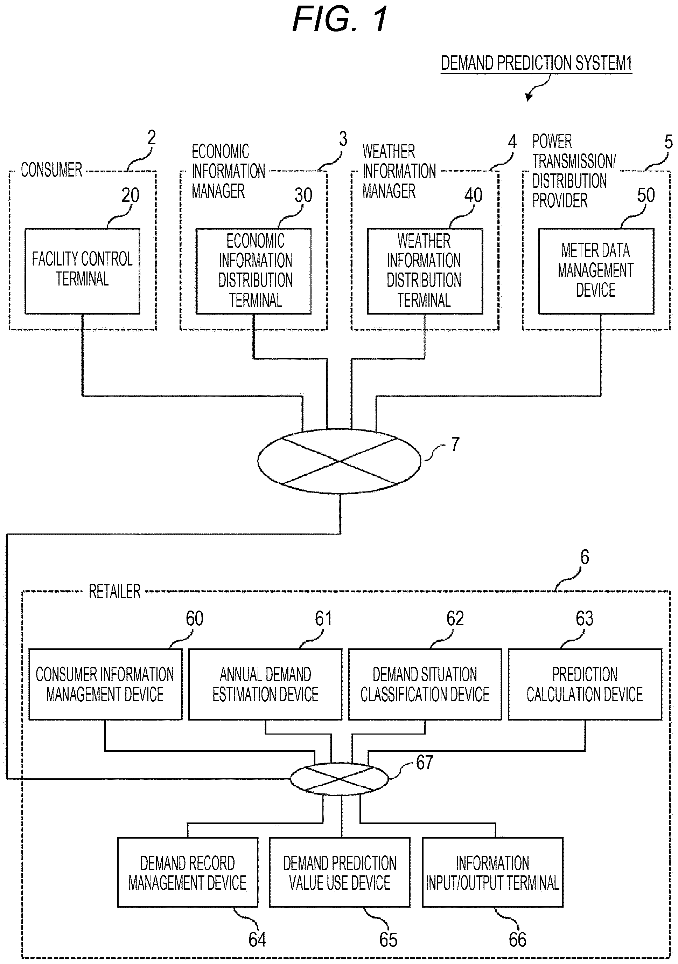

FIG. 1 illustrates the entire configuration of a demand prediction system 1 in this embodiment. The demand prediction system 1 is configured such that a facility control terminal 20 of a consumer 2, an economic information distribution terminal 30 of an economic information manager 3, a weather information distribution terminal 40 of a weather information manager 4, and a meter data management device 50 of a power transmission/distribution provider 5 are connected with a consumer information management device 60, an annual demand estimation device 61, a demand situation classification device 62, a prediction calculation device 63, an demand record management device 64, a demand prediction value use device 65, and an information input/output terminal 66 of a retailer 6 through a network 7. The consumer information management device 60, the annual demand estimation device 61, the demand situation classification device 62, the prediction calculation device 63, the demand record management device 64, the demand prediction value use device 65, and the information input/output terminal 66 of the retailer 6 are connected to the network 7 through a network 67.

For example, the facility control terminal 20 of the consumer 2 is configured by a smart meter (a watt-hour meter for the retailer 6, or a watt-hour meter independently installed by the consumer 2). In the below description, the facility control terminal 20 will be called a meter. The facility control terminal 20 measures the power consumption of the consumer 2, and transits the measurement result to the meter data management device 50 of the power transmission/distribution provider 5 as meter data. The meter data includes a sample for each predetermined sampling period (for example, 30 minutes). The sample may be an integrated value of the power consumption, and may be a difference in the integrated values for each sampling period. In addition, the sample may be a maximum power or an average power of one sampling period.

The economic information distribution terminal 30 of the economic information manager 3 is a server device which has a function of distributing economic information such as GDP (Gross Domestic Product) or IIP (Indices of Industrial Production).

The weather information distribution terminal 40 of the weather information manager 4 is a server device which has a function of distributing weather information such as an average temperature and a maximum temperature.

The meter data management device 50 of the power transmission/distribution provider 5 is a server device which has a function of accumulating and managing the meter data transmitted from the facility control terminal 20 of each consumer 2. Then, the meter data management device 50 sets the data of a measurement period as load data in the accumulated meter data of each consumer 2, and periodically transmits the load data to the demand situation classification device 62 of the retailer 6. The measurement period is one of periods divided in each measurement cycle. For example, the measurement cycle is 1 year, and the measurement period is a fiscal year. Further, the measurement cycle may be another time length such as three months or one month. The measurement period may be set to other durations such as years, seasons, or months. Further, the demand situation classification device 62 may designate the measurement period to the meter data management device 50 to request the load data so as to achieve the load data from the meter data management device 50. A period having a length of the measurement cycle of the future is set as a prediction target period. For example, a period having a length of the next measurement cycle of the latest measurement period is set as the prediction target period.

The consumer information management device 60 of the retailer 6 is a server device which has a function of accumulating and managing attribute information of each consumer 2. The attribute information includes a contract name, an address, a business type, and a contract type of each consumer 2. In addition, the attribute information includes a meter ID for identifying the smart meter of each consumer 2. In a case where there are provided a plurality of smart meters such as a watt-hour meter installed by the retailer 6 and a watt-hour meter installed by a certain consumer, a plurality of meter IDs are associated with the consumer.

The annual demand estimation device 61 of the retailer 6 is a computer device which has a function of estimating a total consumption of a prediction target fiscal year (the prediction target period) on the basis of demand record information received from the demand record management device 64, the economic information received from the economic information distribution terminal 30, and the weather information received from the weather information distribution terminal 40. Further, the economic information may be stored in a device other than the economic information distribution terminal 30 to be achieved by the annual demand estimation device 61. In addition, the weather information may be stored in a device other than the weather information distribution terminal 40 to be achieved by the annual demand estimation device 61.

The demand situation classification device 62 of the retailer 6 is a computer device which has a function of classifying the consumers into several groups on the basis of the load data of each consumer received from the meter data management device 50, and calculating a demand pattern indicating a shape of the representative load data in each group. Further, the load data may be stored in a device other than the meter data management device 50 to be achieved by the demand situation classification device 62.

The prediction calculation device 63 of the retailer 6 is a computer device which has a function of estimating an annual change of the number of consumers and the demand pattern in each group classified by the demand situation classification device 62, estimating a power load curve indicating a transition in the future power consumption by performing multiplication and addition, and proportionally dividing the total demand of the prediction target fiscal year estimated by the annual demand estimation device 61 to each sample using the estimated power load curve so as to estimate a demand time series at every sampling period (for example, 30 minutes) of the prediction target fiscal year.

The demand record management device 64 of the retailer 6 is a computer device which has a function of accumulating and managing a record value of the demand.

The demand prediction value use device 65 of the retailer 6 is a computer device which has a function of simulating the photovoltaic power generation or simulating a balance on the basis of the demand time series of the prediction target fiscal year estimated by the prediction calculation device 63.

The information input/output terminal 66 of the retailer 6 is, for example, a personal computer, and includes a processing device, a communication device, an input device, and a display device. The information input/output terminal 66 is used whenever the retailer 6 inputs an annual demand estimation, a demand pattern classification, and information required for the prediction calculation, or whenever the retailer 6 checks each processing result.

(2) Internal Configuration

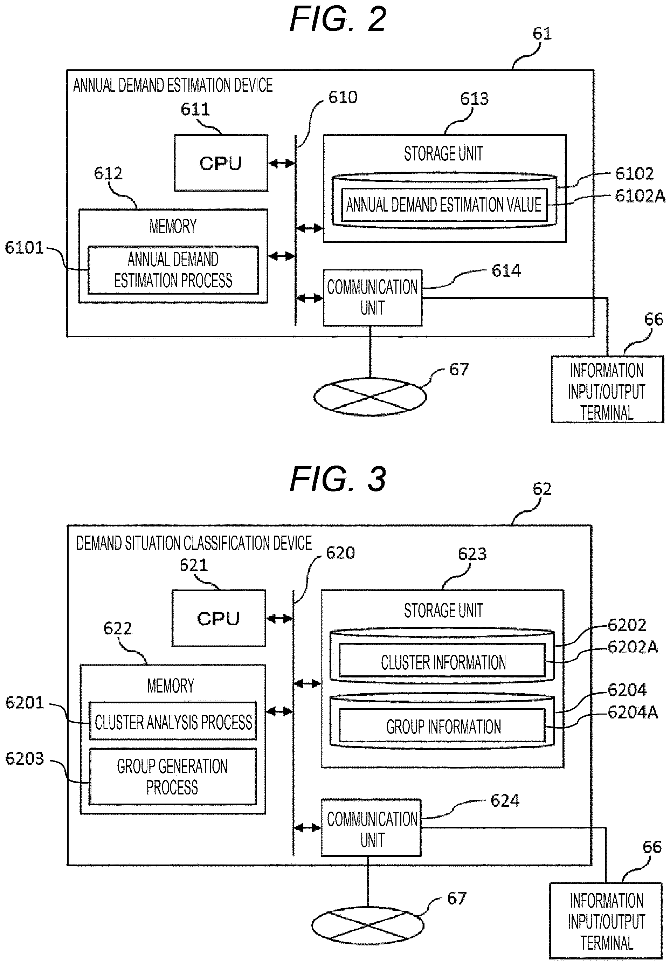

FIG. 2 illustrates a schematic configuration of the annual demand estimation device 61 of the retailer 6. As illustrated in FIG. 2, the annual demand estimation device 61 includes a CPU 611, a memory 612, a storage unit 613, and a communication unit 614 which are connected to each other through an internal bus 610.

The CPU 611 is a processor which serves to control the operations of the annual demand estimation device 61. In addition, the memory 612 is mainly used to temporally store various types of programs and data. Also the program of an annual demand estimation process 6101 described below is stored and held in the memory 612.

The storage unit 613 includes a hard disk device for example, and is used to hold the programs and data for a long period of time. An annual demand estimation information storage unit 6102 described below is stored and held in the storage unit 613. Further, the storage unit 613 may store data received from the economic information distribution terminal 30, the weather information distribution terminal 40, and the information input/output terminal 66.

The communication unit 614 performs a protocol control at the time of communication with the consumer information management device 60, the demand situation classification device 62, the prediction calculation device 63, the demand record management device 64, the demand prediction value use device 65, and the information input/output terminal 66 through the network 67.

FIG. 3 illustrates a schematic configuration of the demand situation classification device 62 of the retailer 6. As illustrated in FIG. 3, the demand situation classification device 62 includes a CPU 621, a memory 622, a storage unit 623, and a communication unit 624 which are connected to each other through an internal bus 620.

The CPU 621 is a processor which serves to control the operations of the demand situation classification device 62. In addition, the memory 622 is mainly used to temporally store various types of programs and data. A cluster analysis process 6201 and a group generation process 6203 are also stored in the memory 622.

The storage unit 623 includes a hard disk device for example, and is used to hold the programs and data for a long period of time. The programs of a cluster information storage unit 6202 and a group information storage unit 6204 are stored and held in the storage unit 623.

The communication unit 624 performs a protocol control at the time of communication with the consumer information management device 60, the annual demand estimation device 61, the prediction calculation device 63, the demand record management device 64, the demand prediction value use device 65, and the information input/output terminal 66 through the network 67.

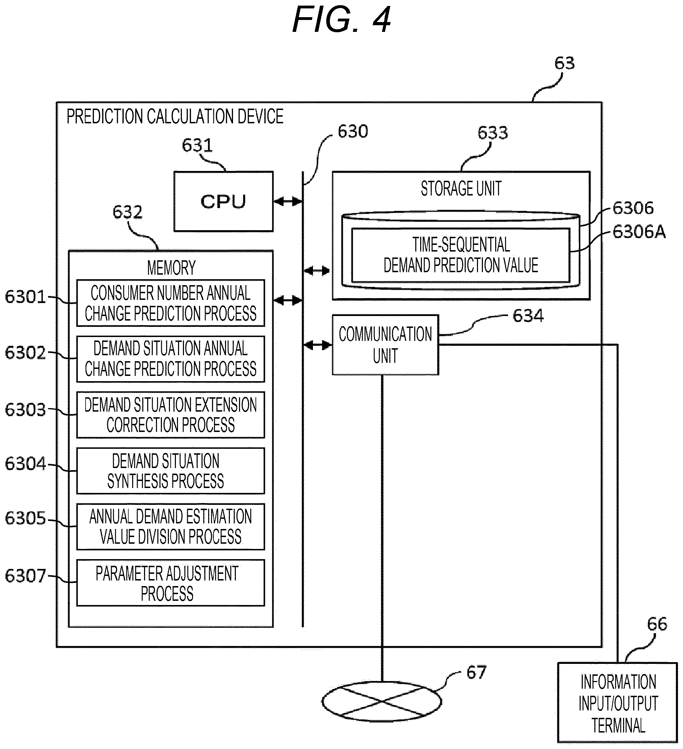

FIG. 4 illustrates a schematic configuration of the prediction calculation device 63 of the retailer 6. As illustrated in FIG. 4, the prediction calculation device 63 includes a CPU 631, a memory 632, a storage unit 633, and a communication unit 634 which are connected to each other through an internal bus 630.

The CPU 631 is a processor which serves to control the operations of the prediction calculation device 63. In addition, the memory 632 is mainly used to temporally store various types of programs and data. The programs of a consumer number annual change prediction process 6301, a demand situation annual change prediction process 6302, a demand situation extension correction process 6303, a demand situation synthesis process 6304, an annual demand estimation value division process 6305, and a parameter adjustment process 6307 are also stored and held in the memory 632.

The storage unit 633 includes a hard disk device for example, and is used to hold the programs and data for a long period of time. The program of a demand prediction information storage unit 6306 described below is stored and held in the storage unit 633.

The communication unit 634 performs a protocol control at the time of communication with the consumer information management device 60, the annual demand estimation device 61, the demand situation classification device 62, the demand record management device 64, the demand prediction value use device 65, and the information input/output terminal 66 through the network 67.

Further, some of the plurality of devices of the retailer 6 may be configured as one. A device having a different function may be included in the devices of the retailer 6. In addition, the retailer 6 may include a device of the power transmission/distribution provider 5. The demand prediction system 1 may not include some devices.

Each program may be installed in a corresponding calculator among the corresponding recording mediums which can be read by the calculator.


(3) Processing Flow in Demand Prediction System


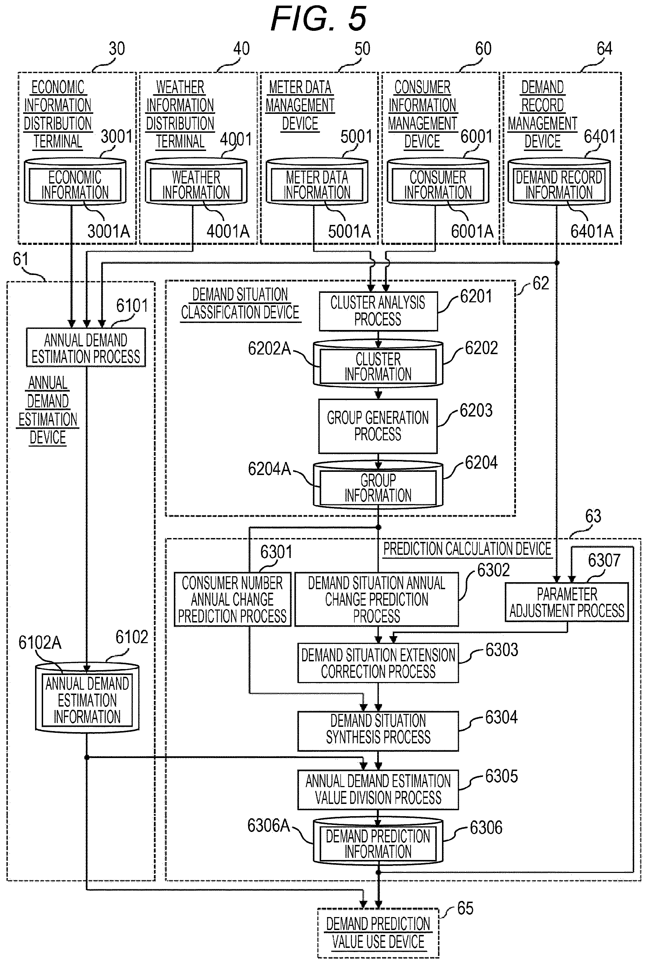

Subsequently, the description will be given about a processing flow in the demand prediction system 1 in this embodiment with reference to FIG. 5.

The annual demand estimation device 61 includes the annual demand estimation process 6101 and the annual demand estimation information storage unit 6102. The demand situation classification device 62 includes the cluster analysis process 6201, the cluster information storage unit 6202, the group generation process 6203, and the group information storage unit 6204. The prediction calculation device 63 includes the consumer number annual change prediction process 6301, the demand situation annual change prediction process 6302, the demand situation extension correction process 6303, the demand situation synthesis process 6304, the annual demand estimation value division process 6305, the demand prediction information storage unit 6306, and the parameter adjustment process 6307. The annual demand estimation information storage unit 6102 stores annual demand estimation information 6102A. The cluster information storage unit 6202 stores cluster information 6202A. The group information storage unit 6204 stores group information 6204A. The demand prediction information storage unit 6306 stores demand prediction information 6306A.

The annual demand estimation process 6101 generates the annual demand estimation information 6102A on the basis of demand record information 6401A received from the demand record management device 64, economic information 3001A received from the economic information distribution terminal 30, weather information 4001A received from the weather information distribution terminal 40, and consumer information 6001A received from the consumer information management device 60.

The cluster analysis process 6201 generates the cluster information 6202A on the basis of the load data of each consumer 2 which is received from the meter data management device 50. The cluster information 6202A includes a cluster ID to identify each cluster, an information item name related to the corresponding cluster, and a value of the information item related to the corresponding cluster.

The group generation process 6203 generates the group information 6204A on the basis of the cluster information 6202A. The group information 6204A includes a group ID to identify each group, an information item name related to the corresponding group, and a value of the information item related to the corresponding group.

The consumer number annual change prediction process 6301 predicts the number of future consumers of each group on the basis of the group information 6204A.

The demand situation annual change prediction process 6302 predicts a future demand pattern of each group on the basis of the group information 6204A.

The demand situation extension correction process 6303 corrects an amplitude component and a DC component (the center value of the amplitude) of the demand pattern of each group on the basis of the future demand pattern of each group estimated by the demand situation annual change prediction process 6302 and a predetermined parameter.

The demand situation synthesis process 6304 estimates the power load curve indicating a transition of the future power consumption by multiplying and adding the demand pattern and the number of consumers of each group on the basis of the number of future consumers of each group predicted by the consumer number annual change prediction process 6301 and the future demand pattern of each group corrected by the demand situation extension correction process 6303.

The annual demand estimation value division process 6305 proportionally divides an annual demand prediction value estimated by the annual demand estimation process 6101 to the samples using the power load curve estimated in the demand situation synthesis process. Therefore, the demand time series is estimated at every sampling period of the prediction target fiscal year.

The parameter adjustment process 6307 corrects a parameter used in the demand situation extension correction process 6303 on the basis of the demand record information 6401A and the demand prediction information 6306A received from the demand record management device 64.

(4) Details of Database

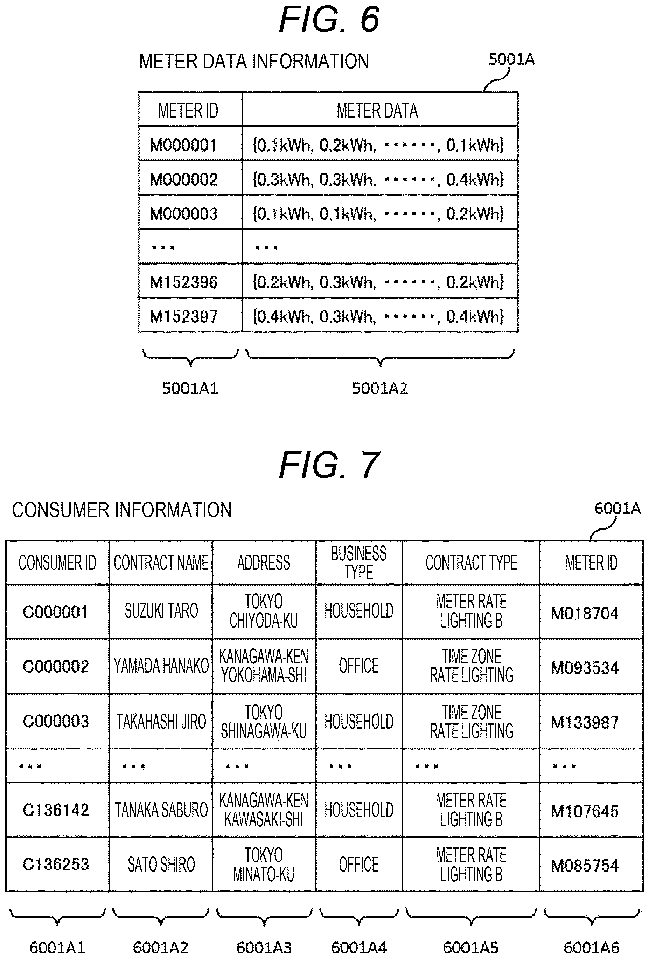

FIG. 6 illustrates a conceptual diagram of meter data information 5001A. The meter data information 5001A is a table which is used to manage the meter data information. Specifically, the meter data information 5001A has an entry for each meter. The entry of one meter includes a meter ID column 5001A1 and the meter data column 5001A2.

In the meter ID column 5001A1, the meter ID is stored as an identification number of the meter. In the meter data column 5001A2, the meter data measured by the corresponding meter is stored.

In the example of FIG. 6, the meter having the meter ID "M000001" contains the meter data "{0.1 kWh, 0.2 kWh, ..., 0.1 kWh}". The meter data is an exemplary data having a sample at every sampling period.

FIG. 7 illustrates a conceptual diagram of the consumer information 6001A. The consumer information 6001A is table which is used to manage the consumer information. Specifically, the consumer information 6001A has an entry for each consumer. The entry of one consumer includes a consumer ID column 6001A1, a contract name column 6001A2, an address column 6001A3, a business type column 6001A4, a contract type column 6001A5, and a meter ID column 6001A6.

In the consumer ID column 6001A1, a consumer ID is stored which is the identification number of the consumer. In the contract name column 6001A2, the contract name of the corresponding consumer is stored. In the address column 6001A3, the address of the corresponding consumer is stored. In the business type column 6001A4, the business type of the corresponding consumer is stored. In the contract type column 6001A5, the contract type of the corresponding consumer is stored. In the meter ID column 6001A6, the meter ID of the corresponding consumer is stored.

In the example of FIG. 7, in the case of the consumer of the consumer ID "C000001", the contract name is "Suzuki Taro", the address is "Tokyo Chiyoda-Ku", the business type is "Household", the contract type is "Meter rate lighting B", and the meter ID is "M018704". Further, the entry is not limited to the above configuration, but may include information such as an owned facility and a family structure.

Further, the entry of one consumer may be the ID of a power distribution installation to which the facility of the consumer is connected. For example, the ID of the power distribution installation is a pole transformer to which the facility of the consumer is connected.

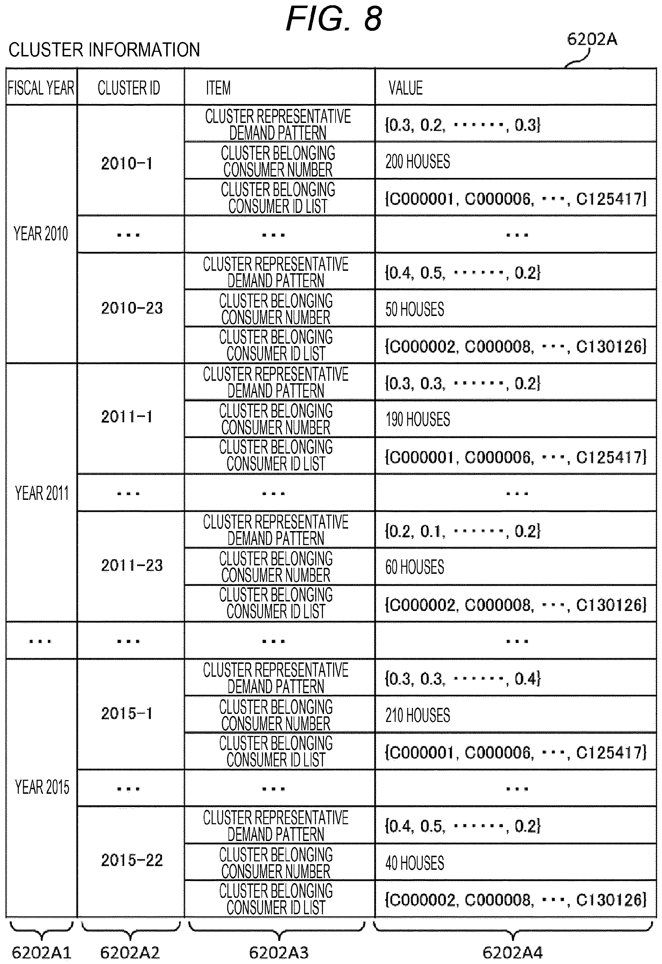

FIG. 8 illustrates a conceptual diagram of the cluster information 6202A. The cluster information 6202A is information which is created by the cluster analysis process 6201. The cluster information 6202A is a table which is used to manage the cluster information. Specifically, the cluster information 6202A includes the entry for each cluster which is classified on the basis of a feature of the load data of the consumer. The entry of one cluster includes a fiscal year column 6201A1, a cluster ID column 6202A2, an item column 6202A3, and a value column 6202A4.

In the fiscal year column 6202A1, the fiscal year is stored. In the cluster ID column 6202A2, the cluster ID is stored which is the identification number of the cluster. In the item column 6202A3, there is stored an item name of information on the corresponding cluster ("cluster representative demand pattern", "cluster belonging consumer number", and "cluster belonging consumer ID list"). In the value column 6202A4, a value of the item of the information on the corresponding cluster is stored.

The cluster representative demand pattern is a demand pattern which shows a shape of the representative load data of the corresponding cluster. The cluster belonging consumer number is the number of consumers belonging to the cluster. The cluster belonging consumer ID list is a set of the consumer IDs of the consumers belonging to the cluster.

In the example of FIG. 8, in the case of the cluster attached with the cluster ID "2010-1", the cluster representative demand pattern is "{0.3, 0.2, ..., 0.3}", the cluster belonging consumer number is "200", and the cluster belonging consumer ID list is "{C000001, C000006, ..., C125417}". The cluster representative demand pattern is exemplary data which has a sample for each sampling period similarly to the load data, has a length of the measurement cycle, and shows a temporal change of the demand.

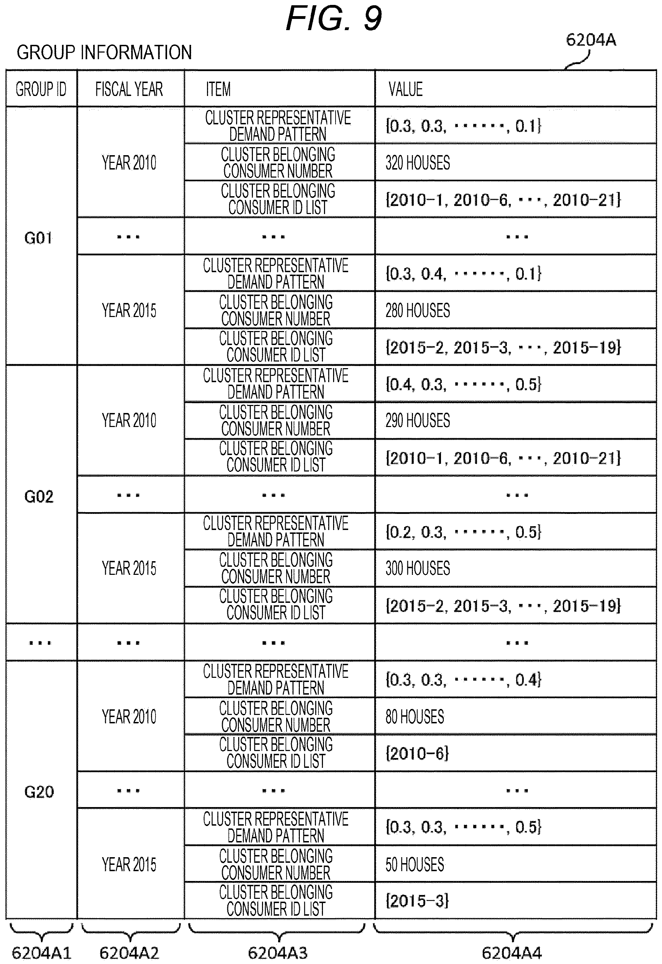

FIG. 9 is a conceptual diagram of the group information 6204A. The group information 6204A is information which is created by the group generation process 6203. The group information 6204A is a table which is used to manage the group information. Specifically, the group information 6204A includes an entry for each group. The entry of one group includes a group ID column 6204A1, a fiscal year column 6204A2, an item column 6204A3, and a value column 6204A4.

In the group ID column 6204A1, the group ID is stored which is the identification number of the group. In the fiscal year column 6204A2, the fiscal year is stored. In the item column 6204A3, there is stored an item name of information on the corresponding group ("group representative demand pattern", "group belonging consumer number", and "group belonging cluster belonging ID list").

The group representative demand pattern is a demand pattern which shows a shape of the representative load data of the corresponding group. The group representative demand pattern may be an average of the cluster representative demand pattern of the clusters belonging to the group, or may be the cluster representative demand pattern of an arbitrary cluster belonging to the group cluster. The group belonging consumer number is the number of consumers belonging to the group. The group belonging cluster ID list is a set of the cluster IDs of the clusters belonging to the group. In the value column 6204A4, a value of the item of the information on the corresponding group is stored.

In the example of FIG. 9, in the case of the group attached with the group ID "G01", the group representative demand pattern of Year 2010 is "{0.3, 0.3, ..., 0.1}", the group belonging consumer number is "320", and the group belonging cluster ID list is "{2010-1, 2010-6, ..., 2010-21}". The group representative demand pattern is exemplary data which has a sample for each sampling period similarly to the load data, has a length of the measurement cycle, and shows a temporal change of the demand.

(5) Details of Each Processing Flow

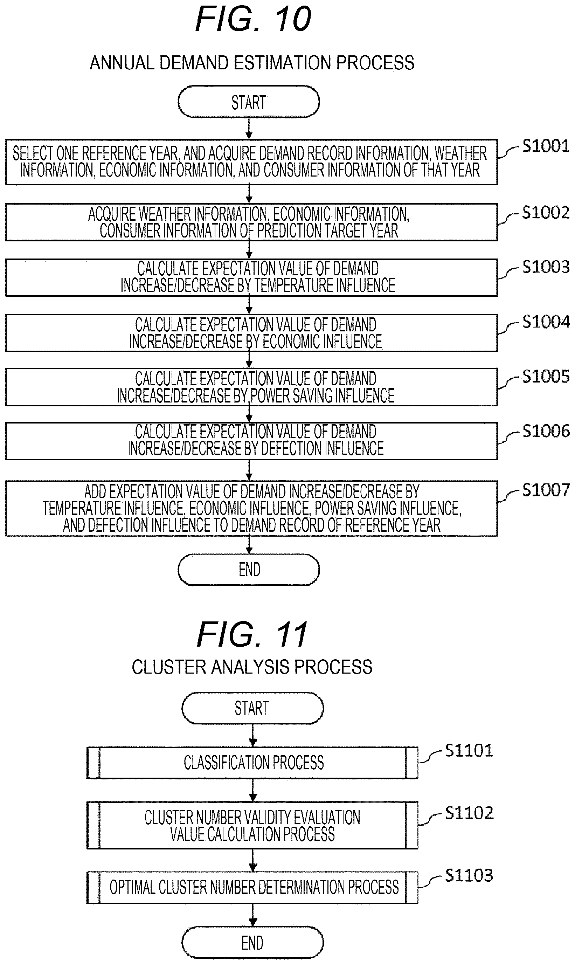

Using FIG. 10 and the subsequent drawings, the description will be given about specific processing contents of processes performed in the annual demand estimation device 61, the demand situation classification device 62, and the prediction calculation device 63 of the retailer 6. Further, each process in the annual demand estimation device 61 is a program stored in the memory 612, and is performed by the CPU 611. In addition, each process in the demand situation classification device 62 is a program stored in the memory 622, and is performed by the CPU 621. In addition, each process in the prediction calculation device 63 is a program stored in the memory 632, and is performed by the CPU 631.

(5-1) Annual Demand Estimation Process

In the annual demand estimation process 6101, a certain fiscal year of the past is set to a reference year, and an expectation value of a demand increase/decrease calculated in consideration of one or more factors among a temperature influence, an economic influence, a power saving influence, and a defection influence is added to the total demand of all the consumers of the reference year so as to estimate the total demand of a prediction target fiscal year of the future.

An example of the process will be described using the flowchart of FIG. 10.

First, in the annual demand estimation process 6101, one reference year is selected, and the demand record information, the weather information, the economic information, and the consumer information of the fiscal year are acquired (S1001). Herein, a total demand and a power saving record of the fiscal year are included in the demand record information. In addition, an average temperature and a maximum temperature of the fiscal year are included in the weather information. In addition, GDP and IIP of the fiscal year are included in the economic information. In addition, in the consumer information, a power saving continuity of each consumer in the fiscal year is included. Next, in the annual demand estimation process 6101, the weather information, the economic information, and the consumer information of the prediction target fiscal year are acquired (S1002). Next, in the annual demand estimation process 6101, the expectation value of the demand increase/decrease caused by the temperature influence is calculated (S1003). For example, the expectation value of the demand increase/decrease caused by the temperature influence is obtained by multiplying a predetermined coefficient to a difference value between an average temperature of the reference year acquired in S1001 and an average temperature of the prediction target fiscal year acquired in S1002. Next, in the annual demand estimation process 6101, the expectation value of the demand increase/decrease caused by the economic influence is calculated (S1004). For example, the expectation value of the demand increase/decrease caused by the economic influence is obtained by multiplying the predetermined coefficient to a difference value between GDP of the reference year and GDP of the prediction target fiscal year. Next, in the annual demand estimation process 6101, the expectation value of the demand increase/decrease caused by the power saving influence is calculated (S1005). For example, the expectation value of the demand increase/decrease caused by the power saving influence is obtained by multiplying the power saving continuity of the prediction target fiscal year acquired in S1002 to the power saving record of the reference year acquired in S1001. Next, in the annual demand estimation process 6101, the expectation value of the demand increase/decrease caused by the defection influence is calculated (S1006). For example, the expectation value of the demand increase/decrease caused by the defection influence is obtained by multiplying the predetermined coefficient to the number of consumers who switch the contract to other providers. Next, in the annual demand estimation process 6101, the annual demand estimation value which is a predicted value of the total demand of the prediction target fiscal year is calculated by adding the temperature influence, the economic influence, the power saving influence, the expectation value of the demand increase/decrease caused by the defection influence which are calculated in S1003 to S1006 to a record value of the total demand of the reference year acquired in S1001 (S1007).

In this embodiment, the annual demand estimation value has been calculated using all the factors of the temperature influence, the economic influence, the power saving influence, and the defection influence, but the annual demand estimation value may be calculated using one, two, or three of any factors. In addition, the expectation value of the demand increase/decrease may be calculated using a factor other than the temperature influence, the economic influence, the power saving influence, and the defection influence, and the annual demand estimation value may be calculated.

According to this process, the annual demand estimation process 6101 can predict the total demand of the prediction target fiscal year in consideration of the temperature influence, the economic influence, the power saving influence, and the defection influence.

(5-2) Cluster Analysis Process

In the cluster analysis process 6201, the consumers 2 are classified into some clusters on the basis of the shape of the load data, and the cluster representative demand pattern showing the shape of the load data representing each cluster is calculated.

An example of this process will be described using the flowchart of FIG. 11.

The cluster analysis process 6201 acquires the load data of the meter ID associated to the consumer ID of each consumer 2 from the meter data management device 50 of the power transmission/distribution provider 5. When the load data corresponding to the consumer ID is acquired, the process illustrated in FIG. 11 starts on the basis of the acquired load data.

First, in step S1101, the cluster analysis process 6201 performs a classification process in which a cluster center set $\{C_k: k = 1, 2, ..., K\}$ is obtained which is a set of cluster centers of the clusters in a case where the M (M is the number of the consumers 2) pieces of load data acquired at this time are classified into K (K = 1 to M) clusters. Specifically, according to a k-means method, a cluster number K is changed from 1 to M such that the cluster center set $\{C_1\}$ is obtained in a case where the load data of the consumer is classified to one cluster, the cluster center set $\{C_1, C_2\}$ of the clusters is obtained in a case where the load data is classified into two clusters, the cluster center set $\{C_1, C_2, C_3\}$ is obtained in a case where the load data is classified into three clusters. Therefore, the cluster analysis process 6201 classifies M pieces of the load data into K clusters to obtain the cluster center set $\{C_k\}$ corresponding to K while changing the cluster number K from 1 to M.

Next, in step S1102, the cluster analysis process 6201 performs a cluster number validity evaluation value calculation process to calculate a value (hereinafter, referred to as a validity evaluation value) for evaluating whether the cluster number K is valid on the basis of the processing result of step S1101. In the case of this embodiment, the cluster analysis process 6201 calculates, as the validity evaluation value, an in-cluster fitness indicating a cohesiveness degree of the load data in each cluster and an inter-cluster average separation indicating a separation degree of the clusters.

Finally, in the cluster analysis process 6201 in step S1103, an optimal cluster number determination process is performed in which an optimal cluster number is determined on the basis of the in-cluster fitness and the inter-cluster average separation calculated in step S1102.

With the above process, the load data of each consumer 2 is classified to an optimal number of clusters.

In addition, in the cluster analysis process 6201, the above processes are performed on the load data of each fiscal year in a predetermined period obtained from the meter data information 5001A so as to calculate the cluster of each fiscal year.

(5-2-1) Classification Process

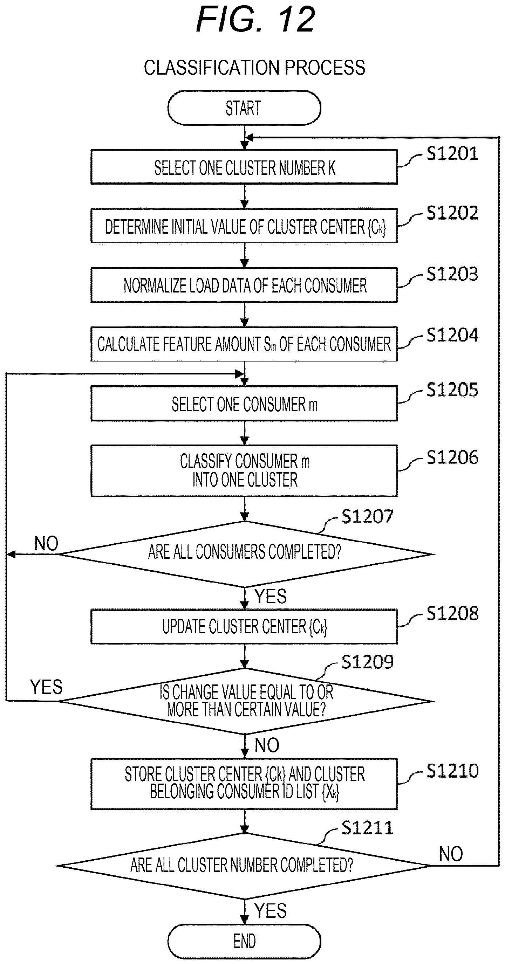

FIG. 12 specifically illustrates a processing content of the classification process performed in step S1101 of the cluster analysis process 6201.

First, in the cluster analysis process 6201, the cluster number K is assumed as one of 1 to M (S1201). At this time, an initial value of the cluster center set $\{C_k : k = 1, 2, ..., K\}$ is set respectively (S1202). The initial value may be any value. For example, a result of the previous classification process may be applied. Next, in the cluster analysis process 6201, the load data of a specific fiscal year of each consumer m $\{m = 1, 2, ..., M\}$, and the acquired load data is normalized to generate normalized load data (S1203) . In this embodiment, in the cluster analysis process 6201, the normalization is performed such that an average of the normalized load data becomes "0", and a standard deviation of the normalized load data becomes "1". With the normalization of the load data, the load data having similar shape can be collected as a cluster without being affected by the magnitude of the load data. Next, the normalized load data of each consumer is analyzed in frequency so as to calculate a feature amount vector $S_m$ (S1204). The normalized load data includes a number of periodic components such as time, day, week, and year. In this embodiment, in the cluster analysis process 6201, a result obtained by performing the discrete Fourier transformation on the normalized load data of each consumer m is set to the feature amount vector $S_m$ of the consumer m in order to perform the classification using a periodic feature of the normalized load data. In addition, the feature amount vector $S_m$ may be information other than the result obtained by the discrete Fourier transformation, or may be time-sequential data itself of the normalized load data, or may be statistical information of the load data such as a combination of an average value, a maximum value, and a minimum value of the load data as long as the information showing the feature of the load data of each consumer m. In addition, without the normalization in S1203, the load data of each consumer may be subjected itself to a frequency analysis to calculate the feature amount vector $S_m$. Next, in the cluster analysis process 6201, one unprocessed consumer m is selected from among the whole consumers (S1205). Then, in the cluster analysis process 6201, a Euclidean distance between each cluster center and the feature amount vector $S_m$ of the consumer m is calculated with respect to the consumer m. Then, in the cluster analysis process 6201, a closest cluster k (the cluster k having a cluster center $C_k$ at which the Euclidean distance from the feature amount vector $S_m$ is minimized) is specified with respect to the feature amount vector $S_m$ of the consumer m, and the consumer ID of the consumer m is registered in an ID list $X_k$ of the consumers belonging to the cluster k (hereinafter, referred to as a cluster belonging consumer ID list) (S1206).

Next, in the cluster analysis process 6201, it is determined whether the process of step S1205 is performed on all the consumers m and ended (S1207). When the negative result is obtained, the procedure returns to step S1205. Then, in the cluster analysis process 6201, the processes of steps S1206 to S1207 is repeatedly performed while sequentially switching the consumer m selected in step S1205 with an unprocessed other consumer m. Hereinafter, a set of K cluster belonging consumer ID lists $X_k$ corresponding to the K clusters will be called a cluster belonging consumer ID list set $\{X_k\}$.

Then, in the cluster analysis process 6201, when all the consumers are completely classified into the cluster belonging consumer ID list set $\{X_k\}$ (S1207: YES), an average feature amount vector $S_{k\_ave} = \{\sum_m s_{m,1}/M, \sum_m s_{m,2}/M, \sum_m s_{m,3}/M, ...\}$ (herein, $m \in X_k$) which is an average value of the feature amount vector of the consumers m listed in the cluster belonging consumer ID list $X_k$ is calculated with respect to each cluster k, and the cluster center set is updated with the average feature amount vector $S_{k\_ave}$ as the cluster center $C_k$ (S1208).

Thereafter, in the cluster analysis process 6201, it is determined whether a change amount in step S1208 of the cluster center $C_k$ of at least one cluster among the cluster center set $\{C_k\}$ is equal to or more than a predetermined change amount threshold on the basis of the cluster center set before the updating in S1208 and the cluster center set $\{C_k\}$ after the updating (S1209). Then, when the positive result is obtained in the determination in the cluster analysis process 6201, the procedure returns to step S1205, and then the processes of steps S1206 to S1209 are repeatedly performed.

Then, in the cluster analysis process 6201, when the change amounts of the cluster centers $C_k$ of all the clusters are less than the change amount threshold (S1209: YES), the cluster center set $\{C_k\}$ and the cluster belonging consumer ID list set $\{X_k\}$ at that moment are stored in a memory 6002 (S1210) .

Next, in the cluster analysis process 6201, it is determined whether the processes of steps S1202 to S1210 are completely performed on all the cluster number K (S1211). Then, when the negative result is obtained in the determination and, then in the cluster analysis process 6201, the processes of steps S1202 to S1211 are repeatedly performed while changing the cluster number K selected in step S1201 into an unprocessed other value (1 to M).

Then, in the cluster analysis process 6201, when the cluster center set $\{C_k\}$ and the cluster belonging consumer ID list set $\{X_k\}$ corresponding to all the cluster number K (1 to M) are completely stored (S1211: YES), the classification process ends.

According to the classification process, a cluster group can be calculated with respect to each cluster number candidate on the basis of the load data of the consumer.

(5-2-2) Cluster Number Validity Evaluation Value Calculation Process

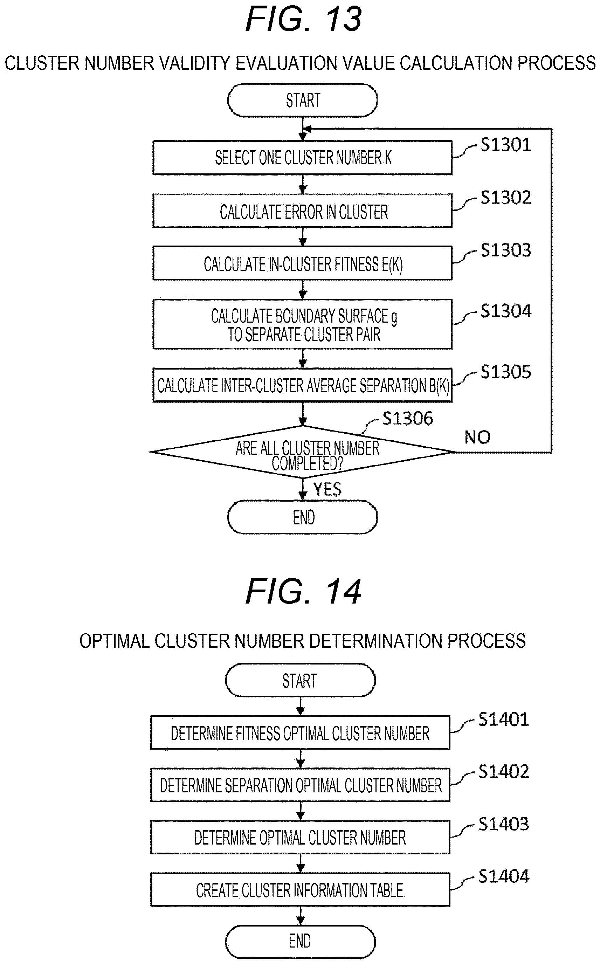

FIG. 13 illustrates a specific processing content of the cluster number validity evaluation value calculation process which is performed in step S1102 of the cluster analysis process 6201. In the cluster number validity evaluation value calculation process, the classification result of each cluster number (1 to M) calculated in step S1101 is evaluated by a plurality of distance indexes such as a distance between the feature amount vector of the load data and the cluster center and a distance between the clusters.

First, in the cluster analysis process 6201, one of 1 to M (M is the total number of consumers) is selected as the cluster number K (S1301). In a case where the cluster number K is assumed as the number selected in step S1301, an error (hereinafter, referred to as an in-cluster error) $E_K$ between the feature amount vector $S_m$ of the consumer m belonging to the cluster belonging consumer ID list $X_k$ and the cluster center $C_k$ of the cluster is calculated for each cluster k (S1302). Specifically, in the cluster analysis process 6201, a distance between the feature amount vector $S_m$ and the cluster center $C_k$ of the cluster k is calculated for each consumer m belonging to the cluster k, and the distances calculated with respect to all the consumers belonging to the cluster k are added to calculate the in-cluster error $E_K$.

Next, in the cluster analysis process 6201, an in-cluster fitness E(K) of each cluster is calculated by the following equation on the basis of the in-cluster error $E_K$ calculated in step S1302 (where, "a" represents a penalty coefficient to suppress the cluster number becomes too large, and "D" represents a dimension of the feature amount) (S1303).

[Math. 1]

$$E(K) = 1/(E_K + a \times K \times D) \qquad \cdots (1)$$

The in-cluster fitness E(K) is an index indicating the cohesiveness degree of each piece of load data in the cluster as described above. In the cluster having a large in-cluster fitness E(K), it shows that the load data is collected. In addition, E(K) becomes small as the cluster number K is increased in the k-means method. In the case of K = M (the total number of consumers), E(K) is minimized. Therefore, in the cluster analysis process 6201, a penalty term a × K × D is added in proportion to the number of parameters in the k-means method.

Next, in the cluster analysis process 6201, a boundary surface g which can separate the clusters is calculated by a large class support vector machine (S1304). Thereafter, a total value of margins (distances) between the clusters is set as $M_K$, and an inter-cluster average separation B(K) is calculated by the following equation.

[Math. 2]

$$B(K) = M_K /_K C_2 \qquad \cdots (2)$$

The inter-cluster average separation B(K) is an index indicating a degree of separation between the clusters as described above. As the degree increased, the clusters are separated. In addition, any index may be used as the inter-cluster average separation as long as the index is increased when the average distance between the clusters. The inter-cluster average separation may be an average distance between the cluster centers in each combination of two clusters.

Thereafter, in the cluster analysis process 6201, it is determined on all the cluster number K (1 to M) whether the in-cluster fitness E(K) and the inter-cluster average separation B(K) are completely calculated (S1306). Then, when the negative result is determined in the cluster analysis process 6201, the processes of steps S1301 to S1306 are repeatedly performed while changing the cluster number K selected in step S1301 into an unprocessed other value (1 to M).

Then, in the cluster analysis process 6201, when the in-cluster fitness E(K) and the inter-cluster average separation B(K) are completely calculated with respect to all the cluster number K (1 to M) (S1306: YES), the cluster number validity evaluation value calculation process ends.

According to the cluster number validity evaluation value calculation process, the cluster group of each cluster number candidate can be evaluated.

(5-2-3) Optimal Cluster Number Determination Process

FIG. 14 illustrates a specific processing content of the optimal cluster number determination process which is performed in step S1103 of the cluster analysis process 6201.

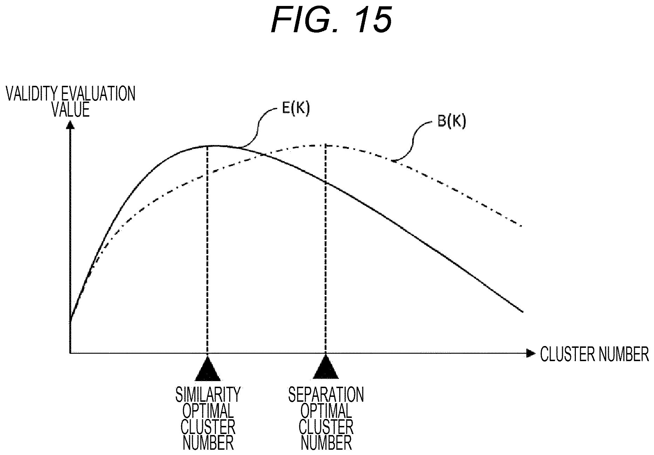

FIG. 15 illustrates a method of determining a fitness optimal cluster number and a separation optimal cluster number. In FIG. 15, the horizontal axis represents a cluster number, and the vertical axis represents the validity evaluation value. The validity evaluation value is the in-cluster fitness $E(K)$ and the inter-cluster average separation $B(K)$. A fitness optimal cluster number CL1 is a cluster number corresponding to a maximum value of the in-cluster fitness $E(K)$. A separation optimal cluster number CL2 is a cluster number corresponding to a maximum value of the inter-cluster average separation $B(K)$. Further, the fitness optimal cluster number CL1 may be a minimum cluster number in which a ratio of the change amount of the in-cluster fitness $E(K)$ to the change amount of the cluster number becomes equal to or less than a predetermined first threshold. The separation optimal cluster number CL2 may be a minimum cluster number in which a ratio of the change amount of the inter-cluster average separation $B(K)$ to the change amount of the cluster number becomes equal to or less than a predetermined second threshold.
First, in the cluster analysis process 6201, the fitness optimal cluster number CL1 is calculated on the basis of the relation between the cluster number K and the in-cluster fitness $E(K)$ in a case where the cluster number K calculated in the cluster number validity evaluation value calculation process is assumed as 1 to M (S1401).
Next, in the cluster analysis process 6201, the separation optimal cluster number CL2 is calculated on the basis of the relation between the cluster number K and the inter-cluster average separation $B(K)$ in a case where the cluster number K calculated in the cluster number validity evaluation value calculation process is assumed as 1 to M (S1402).
Thereafter, in the cluster analysis process 6201, one of the fitness optimal cluster number CL1 calculated in step S1401 and the separation optimal cluster number CL2 calculated in step S1402 is determined as an optimal cluster number (S1403).
Specifically, in the cluster analysis process 6201, in a case where there is at least one cluster number between the fitness optimal cluster number CL1 and the separation optimal cluster number CL2, a cluster number closest to the center value or a cluster number randomly selected therefrom is selected as the optimal cluster number. In addition, in a case where there is no cluster number between the fitness optimal cluster number CL1 and the separation optimal cluster number CL2, any one or predetermined one of the fitness optimal cluster number CL1 and the separation optimal cluster number CL2 is determined as the optimal cluster number in the cluster analysis process 6201.
Finally, in the cluster analysis process 6201, cluster information 5202A (FIG. 8) indicating the cluster information at the time of the classification of the optimal cluster number is created (S1404) on the basis of the determination result of step S1403, and the optimal cluster number determination process ends. In S1404 of the cluster analysis process 6201, the cluster center set $\{C_k\}$ and the cluster belonging consumer ID list set $\{X_k\}$ corresponding the optimal cluster number are selected in the data generated in the classification process. Then, in the cluster analysis process 6201, the cluster center $C_k$ is subjected to the inverse Fourier transformation to calculate the cluster representative demand pattern with respect to each cluster k. Further, the cluster representative demand pattern may be the normalized load data having a shape most frequently appearing in the cluster and the normalized load data corresponding to a specific number in the cluster instead of the result of the inverse Fourier transformation of the cluster center $C_k$. Then, in the cluster analysis process 6201, the cluster information is created using k of the cluster ID, the cluster representative demand pattern, and the cluster belonging consumer ID list $X_k$, and registered in the cluster information 5202A. Further, in the cluster analysis process 6201, the feature amount vector of the cluster center $C_k$ may be registered in the cluster information 5202A instead of the cluster representative demand pattern. Then, in the cluster analysis process 6201, the created cluster information such as the optimal cluster number, the cluster representative demand pattern, the cluster belonging consumer number, and the cluster belonging consumer ID list is transmitted to the information input/output terminal 66 to display the information in the information input/output terminal 66. With this configuration, the retailer 6 can check the optimal cluster number and the feature of a specific cluster.
According to this process, in the cluster analysis process 6201, it is possible to determine the optimal cluster number, and also determine the cluster group of the optimal cluster number and a group of the cluster representative demand pattern corresponding to each cluster group. With this configuration, in the cluster analysis process 6201, the cluster information of the optimal cluster number can be created, and can be associated to any one of the clusters at the time of the classification of each consumer by the optimal cluster number.

(5-3) Group Generation Process

In the group generation process 6203, the clusters having a similar shape of the cluster representative demand pattern but in different fiscal years are associated to generate the group information.

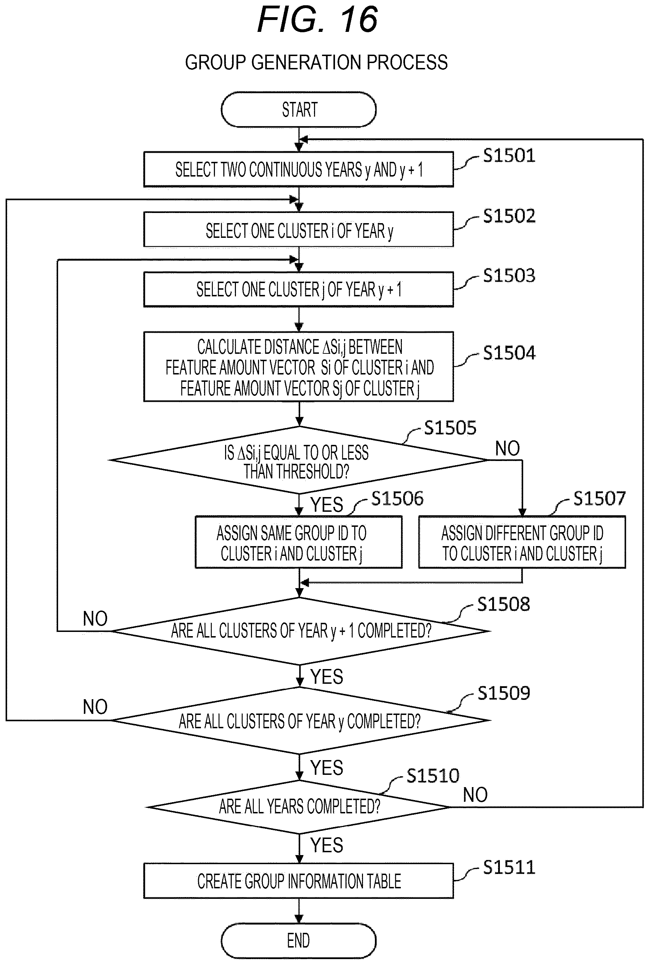

An example of this process will be described using the flowchart of FIG. 16.

First, in the group generation process 6203, two continuous fiscal years y and y + 1 are selected from the cluster information 6202A (S1501). Next, in the group generation process 6203, one cluster i of the fiscal year y is selected from among the cluster information 6202A (S1502), and one cluster j of the fiscal year y + 1 is selected from among the cluster information 6202A (S1503). Next, in the group generation process 6203, the feature amount vector $S_i$ which is the cluster center of the cluster i and a feature amount vector $S_j$ which is the cluster center of the cluster j are acquired, and a distance $\Delta S_{i,j}$ between the feature amount vectors is calculated (S1504). Next, in the group generation process 6203, it is determined whether the distance $\Delta S_{i,j}$ is equal to or less than a predetermined threshold (S1505). If the positive result is obtained, the procedure proceeds to step S1506 to assign the same group ID to the cluster i and the cluster j (S1506). If the negative result is obtained, the procedure proceeds to step S1507 to assign different group IDs to the cluster i and the cluster j (S1507). Next, in the group generation process 6203, it is determined whether the processes of steps S1504 to S1507 are completely performed on all the clusters j of the fiscal year y + 1 (S1508). If the negative result is obtained, the procedure returns to step S1503. Then, in the group generation process 6203, the processes of steps S1504 to S1507 are repeatedly performed while sequentially switching the cluster j selected in step S1503 with an unprocessed other cluster j. Next, in the group generation process 6203, it is determined whether the processes of steps S1503 to S1508 are completely performed on all the clusters i (S1509). If the negative result is obtained, the procedure returns to step S1502. Then, in the group generation process 6203, the processes of steps S1503 to S1508 are repeatedly performed while sequentially switching the cluster i selected in step S1502 with an unprocessed other cluster i. Next, in the group generation process 6203, it is determined whether the processes of steps S1502 to S1509 are completely performed on the fiscal years y and y + 1 (S1510) . If the negative result is obtained, the procedure returns to step S1501. Then, in the group generation process 6203, the processes of steps S1502 to S1509 are repeatedly performed while sequentially switching the fiscal years y and y + 1 selected in step S1501 and the unprocessed other fiscal years y and y + 1. Finally, in the group generation process 6203, the group information 6204A illustrating the group information is created on the basis of the assignment result of the group ID in steps S1506 and S1507 (FIG. 9) (S1511). Then, the group generation process ends. In S1511 of the group generation process 6203, the cluster representative demand pattern of the fiscal year assigned with the same group ID is averaged to calculate the group representative demand pattern of each fiscal year of each group. Further, in the group generation process 6203, the feature amount vector corresponding to the group representative demand pattern may be registered in the cluster information 5202A instead of the group representative demand pattern.

Further, in S1501 to S1503 of the group generation process 6203, two clusters in the same fiscal year may be selected. With this configuration, in the group generation process 6203, in a case where a distance between the feature amount vectors of the plurality of clusters in one fiscal year is near, these cluster can be integrated to one group.

In addition, in the group generation process 6203, the cluster ID of the first fiscal year in the cluster information 6202A may be assigned with the group ID, and the cluster of the next fiscal year may be assigned the group ID of the group in which the distance of the feature amount vector is closest.

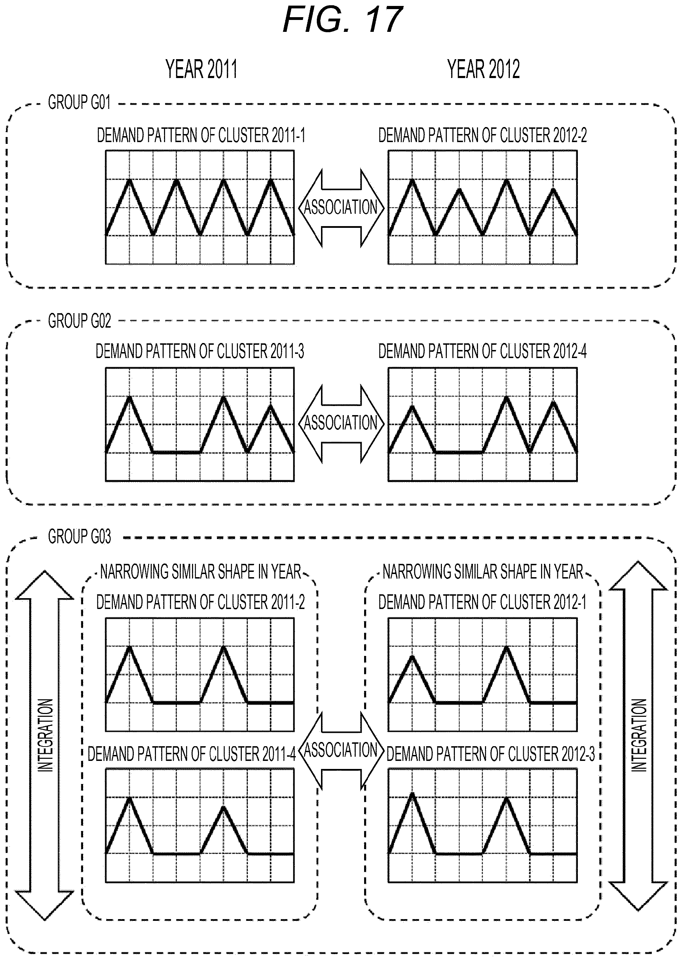

FIG. 17 is a conceptual diagram illustrating a result of the group generation process on the cluster of Year 2011 and the cluster of Year 2012. In FIG. 17, the cluster representative demand patterns of the cluster 2011-1 of Year 2011 and the cluster 2012-2 of Year 2012 are similar, and the group G01 is formed by associating these clusters. In addition, the cluster representative demand patterns of the cluster 2011-3 of Year 2011 and the cluster 2012-4 of Year 2012 are similar, and the group G02 is formed by associating these clusters. In addition, since the cluster representative demand patterns of the cluster 2011-2 and the cluster 2011-4 of Year 2011 are similar, these similar clusters are integrated. Further, since the cluster representative demand patterns of the cluster 2012-1 and the cluster 2012-3 of Year 2012 are similar, these similar clusters are integrated. Then, these clusters are associated to form the group G03.

According to the group generation process, it is possible to know a correspondence relation of the clusters between the fiscal years, and the past annual change of the demand pattern or the number of consumers can be grasped. In the group generation process 6203, the association of the cluster and the group may be displayed in the information input/output terminal 66 as illustrated in FIG. 17.

(5-4) Consumer Number Annual Change Prediction Process

In the consumer number annual change prediction process 6301, the number of future consumers is predicted for each group from the transition of the number of consumers of the past.

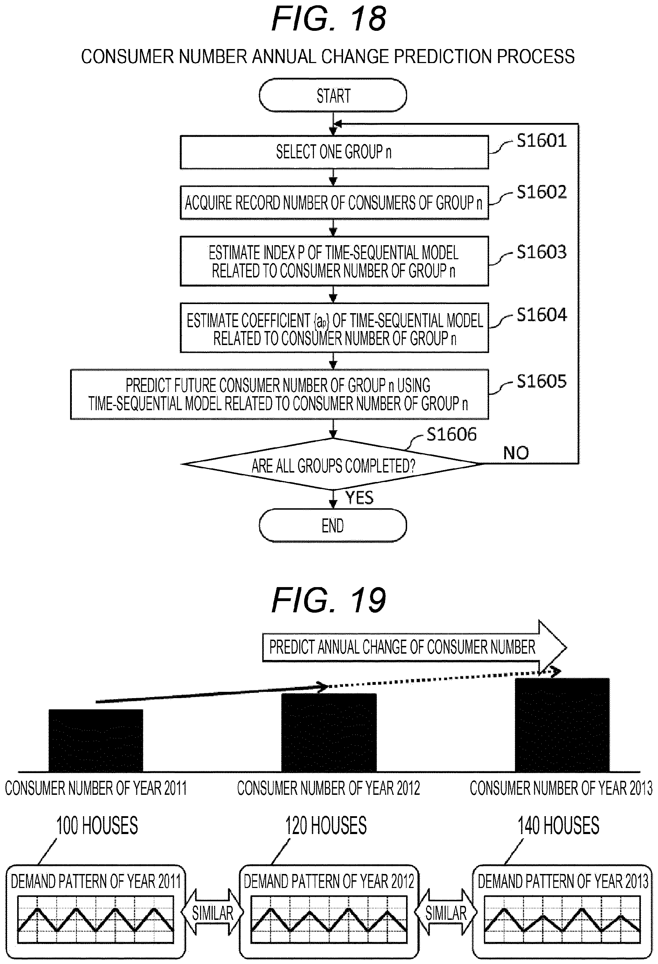

An example of this process will be described using the flowchart of FIG. 18.

First, in the consumer number annual change prediction process 6301, one group n is selected from among the group information 6204A (S1601) . Next, in the consumer number annual change prediction process 6301, a record number of the number of consumers of the group n is acquired with reference to "the group belonging consumer number" of the group n of a plurality of fiscal years of the past in the group information 6204A (S1602). Next, in the consumer number annual change prediction process 6301, an index P of a time-sequential model (AR model, ARMA model, etc.)

related to the number of consumers of the group n is determined by the Box-Jenkins method using the record number of the number of consumers of the group n acquired in S1602 (S1603) . In this embodiment, the AR model is used as the time-sequential model. Next, in the consumer number annual change prediction process 6301, a coefficient $\{a_p: p = 1, 2, .., P\}$ of the time-sequential model of the index P determined in S1603 is estimated by a least square method (S1604). Next, the number of consumers of the prediction target fiscal year of the group n of the future is estimated as a prediction consumer number (a prediction number of the group belonging consumer number) using the time-sequential model estimated in S1604 (S1605). Next, in the consumer number annual change prediction process 6301, it is determined whether the processes of steps S1602 to S1605 are completely performed on all the groups n (S1606). If the negative result is obtained, the procedure proceeds to step S1601. Then, in the consumer number annual change prediction process 6301, the processes of steps S1602 to S1605 are repeatedly performed while sequentially switching the group n selected in step S1601 with an unprocessed other group n.

Then, in the consumer number annual change prediction process 6301, the number of consumers of the prediction target fiscal year is completely predicted on all the groups n. If the positive result is obtained in step S1606, the consumer number annual change prediction process ends.

In this embodiment, the number of consumers is predicted using the AR mode as the time-sequential model, but the number of consumers may be predicted using other time-sequential models such as ARMA model or ARIMA model. In addition, in this embodiment, the prediction has been performed using the time-sequential model in S1603 to S1605, but the number of future consumers may be predicted using an extrapolation method.

FIG. 19 is a conceptual diagram illustrating a processing content of the consumer number annual change prediction process . In FIG. 19, the number of consumers is increased from 100 houses in Year 2011 to 120 houses in Year 2012. In the consumer number annual change prediction process 6301, an increasing trend of the number of houses is grasped, and thus the number of consumers in Year 2013 is predicted as 140 houses.

According to the consumer number annual change prediction process, the annual change of the number of consumers can be predicted by replacing the consumers of the groups, and the prediction accuracy of the demand is improved. In the consumer number annual change prediction process 6301, as illustrated in FIG. 19, the prediction value of the number of consumers of the prediction target fiscal year and the consumer number annual change may be displayed in the information input/output terminal 66.

(5-5) Demand Situation Annual Change Prediction Process

In the demand situation annual change prediction process 6302, the future demand pattern is predicted for each group from the transition of the demand pattern of the past.

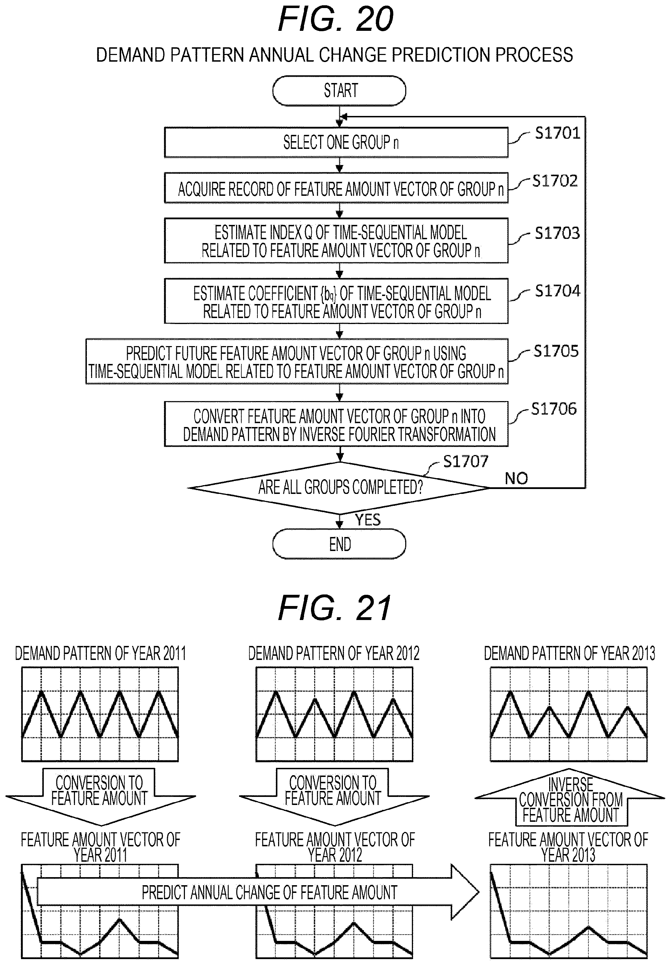

An example of this process will be described using the flowchart of FIG. 20.

First, in the demand situation annual change prediction process 6302, one group n is selected from among the group information 6204A (S1701). Next, in the demand situation annual change prediction process 6302, a record of the feature amount vector of the group n of a plurality of fiscal years of the past is acquired (S1702). Next, in the demand situation annual change prediction process 6302, an index Q of the time-sequential model (VAR model (Vector Autoregression model), VARMA model (Vector Autoregression Moving-Average model), etc.) related to the feature amount vector of the group n is estimated by the Box-Jenkins method using a record of the feature amount vector of the group n acquired in S1702 (S1703). In this embodiment, the VAR model is used as the time-sequential model. Next, in the demand situation annual change prediction process 6302, a coefficient $\{b_q: q = 1, 2, ..., Q\}$ of the time-sequential model of the index Q determined in S1703 is estimated by a least square method (S1704). Next, in the demand situation annual change prediction process 6302, the feature amount vector of the prediction target fiscal year of the group n of the future is predicted using the time-sequential model estimated in S1704 (S1705). Next, in the demand situation annual change prediction process 6302, the predicted feature amount vector of the group n is converted into the demand pattern by the inverse Fourier transformation to calculate an estimation demand pattern (a prediction value of the group representative demand pattern) (S1706). Next, in the demand situation annual change prediction process 6302, it is determined whether the processes of steps S1702 to S1706 are completely performed on all the groups n (S1707). If the negative result is obtained, the procedure returns to step S1701. Then, in the demand situation annual change prediction process 6302, the processes of steps S1702 to S1706 are repeatedly performed while sequentially switching the group n selected in step S1701 with an unprocessed other group n.

Then, in the demand situation annual change prediction process 6302, the demand pattern of the prediction target fiscal year is completely predicted on all the groups n. If the negative result is obtained in step S1707, the demand situation annual change prediction process ends.

In this embodiment, the feature amount vector is predicted using the VAR model as the time-sequential model, but the feature amount vector may be predicted using the other time-sequential model such as VARMA model or VARIMA model. In addition, in this embodiment, the prediction has been performed using the time-sequential model in S1703 to S1705, but the feature amount vector of the future may be predicted using an extrapolation method.

FIG. 21 is a conceptual diagram illustrating a processing content of the demand situation annual change prediction process. In FIG. 21, a change trend of the feature amount vector from Year 2011 to Year 2012 (the peaks of 2nd and 4th mountains of the demand pattern are decreased) is grasped, and thus the demand pattern of Year 2013 is predicted.

According to the demand situation annual change prediction process, the annual change of the demand pattern caused by the change in lifestyles can be predicted, and the prediction accuracy of the demand is improved. In the demand situation annual change prediction process 6302, as illustrated in FIG. 21, the prediction value of the demand pattern of the prediction target fiscal year, the prediction value of the feature amount vector, and the annual change demand pattern may be displayed in the information input/output terminal 66.

(5-6) Demand Situation Extension Correction Process

In the demand situation extension correction process 6303, a coefficient is multiplied to the demand pattern of each group of the prediction target fiscal year estimated in the demand situation annual change prediction process 5302 to add a bias for the correction.

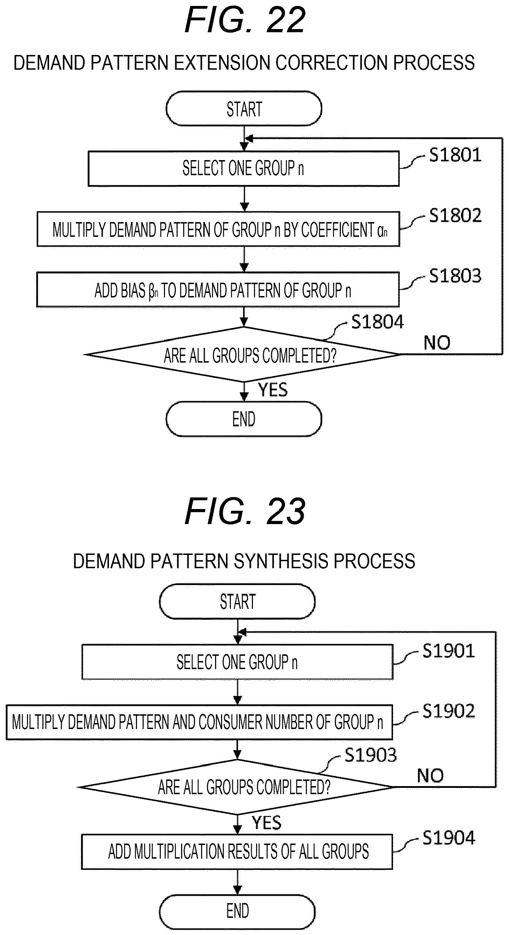

An example of this process will be described using the flowchart of FIG. 22.

First, in the demand situation extension correction process 6303, one group n is selected from among the group information 6204A (S1801). Next, in the demand situation extension correction process 6303, a coefficient $\alpha_n$ is multiplied to the estimation demand pattern of the group n to correct the magnitude of an amplitude component of the estimation demand pattern of the group n so as to calculate a corrected demand pattern (S1802). Next, in the demand situation extension correction process 6303, a bias $\beta_n$ is added to the corrected demand pattern of the group n to correct the magnitude of the DC component of the corrected demand pattern of the group n (S1803). Next, in the demand situation extension correction process 6303, it is determined whether the processes of steps S1802 to S1803 are completely performed on all the groups n (S1804). If the negative result is obtained, the procedure returns to step S1801. Then, in the demand situation extension correction process 6303, the processes of steps S1802 to S1804 are repeatedly performed while sequentially switching the group n selected in step S1801 with an unprocessed other group n.

Then, in the demand situation extension correction process 6303, the demand situation extension correction process is completed on all the group n. If the positive result is obtained in step S1804, the demand situation extension correction process ends.

(5-7) Demand Situation Synthesis Process

In the demand situation synthesis process 6304, the prediction consumer number estimated in the consumer number annual change prediction process 6301 and the corrected demand pattern obtained in the demand situation extension correction process 6303 are multiplied and added for each group. The power load curve of the prediction target fiscal year of the future is estimated.

An example of this process will be described using the flowchart of FIG. 23.

First, in the demand situation synthesis process 6304, one group n is selected from among the group information 6204A (S1901). Next, in the demand situation synthesis process 6304, the corrected demand pattern of each the group n obtained in a demand pattern extension process 5303 and the prediction consumer number of the group n predicted in the consumer number annual change prediction process are multiplied to obtain a multiplication result (S1902). Next, in the demand situation synthesis process 6304, it is determined whether the process of step S1902 is completely performed on all the group n (S1903). If the negative result is obtained, the procedure returns to step S1901. Then, in the demand situation synthesis process 6304, the processes of steps S1902 to S1903 are repeatedly performed while sequentially switching the group n selected in step S1901 with an unprocessed other group n. Next, in the demand situation synthesis process 6304, the multiplication results of all the groups are added, and a prediction value of the power load curve of the prediction target fiscal year of the future is calculated (S1904).

(5-8) Annual Demand Estimation Value Division Process

In the annual demand estimation value division process 6305, the annual demand estimation value estimated in the annual demand estimation process 6101 is proportionally divided into samples using the prediction value of the power load curve calculated in the demand situation synthesis process 6304, and the demand time series is estimated at every sampling period of the prediction target fiscal year.

The prediction value $\{d_k| k = 1, 2, ..., K\}$ at every sampling period in the prediction target fiscal year is obtained by the following equation (where, D represents the annual demand estimation value estimated in the annual demand estimation process 6101, and $\{L_k| k = 1, 2, ..., K\}$ represents the prediction value of the power load curve calculated in the demand situation synthesis process 6304 (K is a sampling number in the measurement cycle).

14

[Math. 3]

$$d_k = D \times \frac{L_k}{\sum_{k=1}^{K} L_k} \qquad \cdots (3)$$

With this equation, in the annual demand estimation value division process 6305, the demand time series indicating an electric power amount can be calculated from a dimensionless power load curve (shape data indicating a shape of the time-sequential data of the demand of a consumer set). In the annual demand estimation value division process 6305, the power load curve and the demand time series may be displayed in the information input/output terminal 66.

(5-9) Parameter Adjustment Process

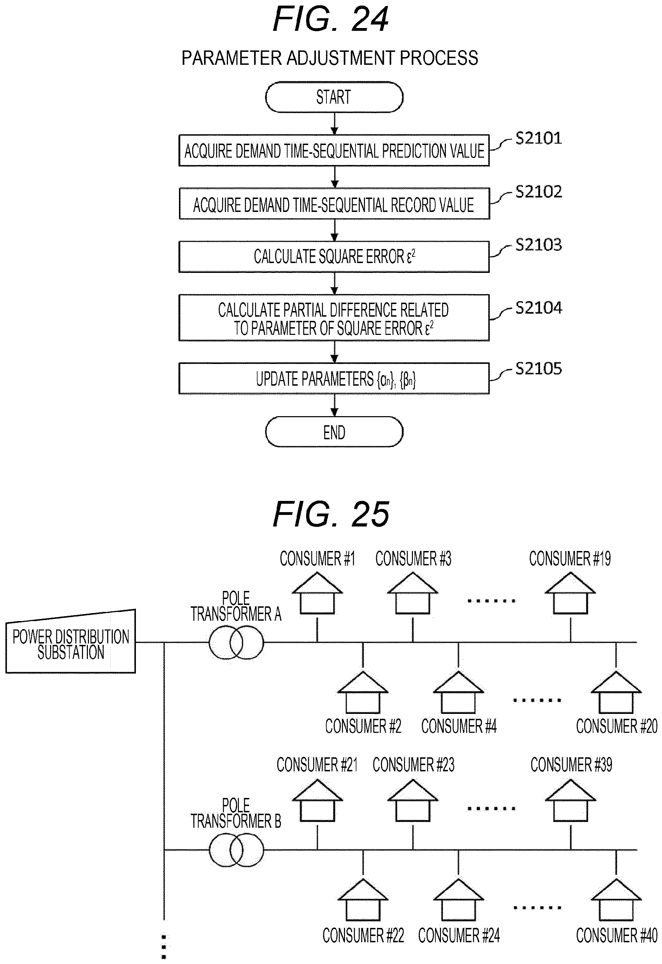

In the parameter adjustment process 6307, the prediction target fiscal year is set as an adjustment target fiscal year after the prediction target fiscal year ends, and a record value of the demand time series of the adjustment target fiscal year is acquired. The coefficient $\{\alpha_n | n = 1, 2, ..., N\}$ and the bias $\{\beta_n | n = 1, 2, ..., N\}$ used in the demand situation extension correction process 6303 are adjusted such that an error between the record value of the demand time series of the adjustment target fiscal year and the prediction value is minimized (N is a group number) . Further, in the parameter adjustment process 6307, the parameter may be adjusted using an adjustable portion among the record values of the demand time series of the adjustment target fiscal year in the adjustment target fiscal year.
An example of this process will be described using the flowchart of FIG. 24.
First, in the parameter adjustment process 6307, the predication value of the demand time series of the adjustment target fiscal year is acquired with reference to the demand prediction information 6306A (S2101). Next, in the parameter adjustment process 6307, the prediction value of the demand time series of the adjustment target fiscal year acquired in S2101 and the record value of the demand time series of the adjustment target fiscal year are acquired with reference to the demand record information 6401A (S2102). Next, in the parameter adjustment process 6307, a squared error $\varepsilon^2$ of the prediction value with respect to the record value is calculated (S2103). Next, in the parameter adjustment process 6307, a partial differentiation of the squared error $\varepsilon^2$ related to the coefficient $\{\alpha_n | n = 1, 2, ..., N\}$ and the bias $\{\beta_n | n = 1, 2, ..., N\}$ used in the demand situation extension correction process 6303 is calculated (S2104). Finally, in the parameter adjustment process 6307, the coefficient $\{\alpha_n | n = 1, 2, ..., N\}$ and the bias $\{\beta_n | n = 1, 2, ..., N\}$ used in the demand situation extension correction process 6303 are updated from the partial differentiation result by a steepest descent method (S2105). In the process 6307, the coefficient $\alpha_n$ or the bias $\beta_n$ may be updated by a Lagrangian relaxation or a neural network instead of the steepest descent method.
According to the processing of the parameter, the coefficient and the bias used in the demand situation extension correction process 6303 can be adjusted by minimizing an error between the record value of the demand time series and the prediction value, and are used in the demand situation extension correction process 6303 of the next prediction target fiscal year to improve the prediction accuracy of the demand time series of the next prediction target fiscal year. In addition, even in a case where the demand of the consumer with no smart meter is contained in the total demand, the prediction accuracy of the demand time series can be improved by performing the correction process using these parameters.
Further, in the above embodiment, each of the load data, the cluster representative demand pattern, and the group representative demand pattern indicating the variation in power use is a data string of a time domain, but may be a time string of a frequency domain.
For example, the demand situation classification device 62 may not include the cluster analysis process 6201, the cluster information storage unit 6202, and the group generation process 6203. In this case, the demand situation classification device 62 generates a group for each attribute such as the business type and the contract type with reference to the consumer information 6001A (the groups are generated such that a consumer of which the contract type is the meter rate lighting B is the group G01, a consumer of the time zone rate lighting is the group G02, and so on).
In addition, for example, the prediction calculation device 63 may not include the annual demand estimation value division process 6305. In this case, the prediction calculation device 63 sets the data string of the power load curve generated in the demand situation synthesis process 6304 to the prediction value of the demand time series.
In addition, for example, the prediction calculation device 63 may not include the demand situation extension correction process 6303 and the parameter adjustment process 6307. In this case, the prediction calculation device 63 multiplies and adds the prediction consumer number estimated in the consumer number annual change prediction process 6301 and the estimation demand pattern estimated in the demand situation annual change prediction process 6302 for each group so as to generate the prediction value of a dimensionless power load curve, and proportionally divides the annual demand estimation value into groups using the prediction value of the generated dimensionless power load curve so as generate the prediction value of the demand time series at every sampling period.

In addition, for example, in the above embodiment, the demand prediction system 1 has estimated the total demand of the prediction target fiscal year of all the consumers under contract with the retailer 6, and estimated the demand time series of the prediction target fiscal year at every sampling period by proportionally divide the estimated total demand using the prediction value of the power load curve. However, the demand time series of the prediction target fiscal year with respect to the pole transformer may be estimated by estimating a total demand of the consumers connected to an arbitrary pole transformer and proportionally dividing the estimated total demand into samples using the prediction value of the power load curve.

For example, in a case where the demand time series of the prediction target fiscal year of a pole transformer A in FIG. 25 is estimated, the demand prediction system 1 specifies the consumers having the smart meter among Consumer #1 to Consumer #20 connected to the pole transformer A as a consumer set among the consumers indicated in the consumer information 6001A on the basis of the consumer information 6001A, acquires the load data of the consumer set, classifies the consumer set into a plurality of group on the basis of the acquired load data, predicts the annual changes of the number of consumers and the demand pattern for each classified group, predicts the power load curve of the pole transformer A by performing multiplication and addition so as to predict the power load curve of the pole transformer A, and proportionally divides a total demand (a total of demand of Consumer #1 to Consumer #20) into samples using the prediction value of the power load curve. Therefore, the demand time series of the prediction target fiscal year with respect to the pole transformer A is estimated.

In addition, for example, the demand prediction system 1 estimates a maximum demand which is a total demand of using an arbitrary pole transformer, and proportionally divides the prediction value of the power load curve into samples in accordance with the estimated maximum demand. Therefore, the demand time series at every sampling period of the prediction target fiscal year with respect to the pole transformer may be estimated.

In addition, for example, the demand prediction system 1 may estimate the demand time series (a power prediction amount at every sampling period in the prediction target fiscal year) of the prediction target fiscal year of the future from the demand time series (a power record amount at every sampling period) of the past of the facilities related to the power supply. The demand time series of the past of the facilities related to the power supply may be a feeding power amount of a power distributing substation at every sampling period, or may be an electric power amount which passes through an arbitrary pole transformer at every sampling period.

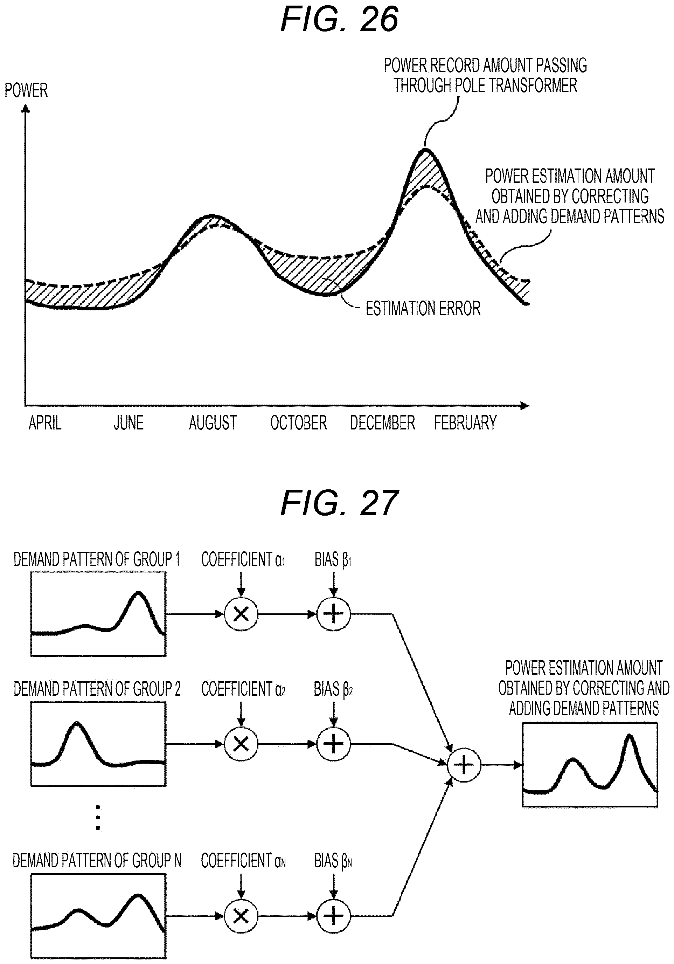

For example, the demand prediction system 1 calculates a prediction error E (the shaded portion of FIG. 26) using the power record amount $\{D_t| t = 1, 2, ..., T\}$ (the solid line of FIG. 26) at every sampling period which passes through an arbitrary pole transformer and an estimated power amount $\{De_t| t = 1, 2, ..., T\}$ (the broken line of FIG. 26) obtained by correcting and adding the demand patterns $\{L_{n,t}| t = 1, 2, ..., T\}$ of the respective groups, adjusts the coefficient $\{\alpha_n| n = 1, 2, ..., N\}$ and the bias $\{\beta_n| n = 1, 2, ..., N\}$ used in the correction of extending/contracting (multiplying and adding the demand pattern data) the demand pattern to minimize the prediction error E, and can predict the electric power amount at every sampling period of the pole transformer in the prediction target fiscal year using the adjusted coefficient $\alpha_n$ and the adjusted bias $\beta_n$. Herein, the demand prediction system 1 corrects and adds the amplitude and the DC component of the demand pattern $\{L_{n,t}| t = 1, 2, ..., T\}$ of each group using the coefficient $\alpha_n$ and the bias $\beta_n$ as illustrated in FIG. 27 so as to calculate the estimated power amount $\{De_t| t = 1, 2, ..., T\}$.

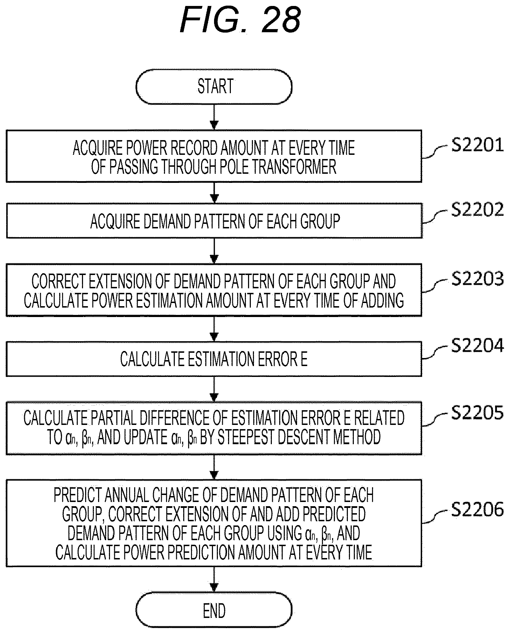

An example of this process will be described using the flowchart of FIG. 28.

First, the prediction calculation device 63 selects an arbitrary pole transformer, and acquires the power record amount $D_t$ at every time when the pole transformer is passed in the adjustment target fiscal year with reference to the demand record information 6401A (S2201). Next, the prediction calculation device 63 acquires the demand pattern $L_{n,t}$ of each group with reference to the group information 6204A (S2202). The group information 6204A is generated using the load data of the consumer having the smart meter among the consumers connected to the transformer. Next, the prediction calculation device 63 corrects and adds the demand pattern of each group acquired in S2202 as illustrated in FIG. 27 using the coefficient $\alpha_n$ and the bias $\beta_n$ so as to calculate the estimated power amount $De_t$ (S2203). The estimated power amount $De_t$ is obtained as follows. Herein, De is represented by D with symbol ^ attached over.

[Math. 4]

$$\hat{D}_t = \sum_{n=1}^{N} \left( \alpha_n L_{n,t} + \beta_n \right) \qquad \cdots (4)$$

Next, the prediction calculation device 63 calculates the prediction error E using the power record amount $D_t$ and the estimated power amount $De_t$ (S2204). The prediction error E is obtained by the following equation.

[Math. 5]

$$E = \sum_{t=1}^{T} \left| D_t - \hat{D}_t \right| \qquad \cdots (5)$$

Next, the prediction calculation device 63 calculates a partial differentiation of the prediction error E related to the coefficient $\alpha_n$ and the bias $\beta_n$, and updates the coefficient $\alpha_n$ and the bias $\beta_n$ by the steepest descent method, the Lagrangian relaxation, or the neural network (S2205). Finally, the prediction calculation device 63 predicts the demand pattern $\{Le_{n,t} | t = 1, 2, ..., T\}$ of each group of the prediction target fiscal year on the basis of the annual change of the demand pattern of each group acquired in S2202, and corrects and adds these demand patterns using the coefficient $\alpha_n$ and the bias $\beta_n$ updated in S2205 so as to calculate the power prediction amount $\{d_t | t = 1, 2, ..., T\}$ at every sampling period of the pole transformer in the prediction target fiscal year (S2206). The power prediction amount $d_t$ is obtained as follows. Herein, Le is represented by L with symbol ^ attached over.

[Math. 6]

$$d_t = \sum_{n=1}^{N} \left( \alpha_n \hat{L}_{n,t} + \beta_n \right) \qquad \cdots (6)$$

According to this process, it is possible to adjust the coefficient and the bias used in the correction of the demand pattern to minimize the prediction error between the power record amount at every time when an arbitrary pole transformer is passed and the estimated power amount obtained by correcting and adding the demand pattern of each group, so that the prediction accuracy of the demand is improved.

The above embodiments have been described about the prediction of demand of the power, but the invention may be applied to the prediction of demand of other resources. The demand may be demand for gas, negawatt power, water, hot/cold water, and vehicles for passenger transportation, vehicles for freight transportation, and resources such as services or materials. The facility control terminal 20 (meter) includes a gas meter, a meter for power selling, a meter for water purifying, a meter for sewer, a meter for water amount, a meter for taxi, a meter for traveling record, and a POS (point of sale) device.

The demand prediction system corresponds to the prediction calculation device 63, the demand situation classification device 62, and the annual demand estimation device 61. A storage device corresponds to the storage units 613, 623, and 633, and the memories 612, 622, and 632. A display device corresponds to the information input/output terminal 66. The demand pattern data corresponds to the demand pattern, and the feature amount vector. The shape data corresponds to the power load curve . An integrated demand corresponds to the total demand and the total demand. The demand time series data corresponds to the demand time series. A first parameter corresponds to the coefficient $\alpha_n$. A second parameter corresponds to the bias $\beta_n$. A representative feature amount vector corresponds to the feature amount vector of the group representative demand pattern. Factor data corresponds to the weather information, the economic information, and the consumer information.

Hitherto, the embodiments of the invention have been described, and are given as merely exemplary. There is no purpose of limiting the scope of the invention only to the above configurations. The invention may be implemented in various other forms.

Reference Signs List

1      demand prediction system
2      consumer
3      economic information manager
4      weather information manager
5      power transmission/distribution provider
6      retailer
7      network
20     facility control terminal
30     economic information distribution terminal
40     weather information distribution terminal
50     meter data management device
60     consumer information management device
61     annual demand estimation device

62   demand situation classification device
63   prediction calculation device
64   demand record management device
65   demand prediction value use device
66   information input/output terminal

**Claims**

1. A demand prediction system, comprising:

   a storage device; and
   a processor which is connected to the storage device,
   wherein the processor is configured such that
   time-sequential load data of a resource demand of a plurality of consumers in a consumer set is associated to a plurality of groups, and the storage device acquires demand pattern data indicating a shape representing the load data in each group and the number of consumers belonging to each group, and
   shape data indicating a shape of the time-sequential load data of the demand of the consumer set in a predetermined prediction target period is calculated on the basis of a record value of the demand pattern data of each group and a record value of the number of consumers of each group.

2. The demand prediction system according to claim 1,
   wherein the storage device is configured to store a record value of the number of consumers of each group in each of a plurality of past predetermined measurement period,
   wherein the processor is configured to
   calculate a prediction value of the number of consumers of each group in the prediction target period on the basis of the record value of the number of consumers, and
   calculate the shape data on the basis of the demand pattern data and the prediction value of the number of consumers.

3. The demand prediction system according to claim 2,
   wherein the storage device is configured to store the record value of the demand pattern data of each group of each measurement period,
   wherein the processor is configured to
   calculate a prediction value of the demand pattern data in the prediction target period of each group on the basis of the record value of the demand pattern data, and
   calculate the shape data on the basis of the prediction value of the demand pattern data and the prediction value of the number of consumers.

4. The demand prediction system according to claim 3,
   wherein the processor is configured to
   acquire a record value of an integrated demand in at least one reference period of the plurality of measurement periods, the integrated demand being a demand of the consumer set integrated over a predetermined period,
   acquire factor data which influences on an increase/decrease of the demand,
   calculate a prediction value of the integrated demand in the prediction target period on the basis of the record value of the integrated demand and the factor data, and
   calculate a prediction value of demand time series data which is time-sequential data of the demand of the consumer set in the prediction target period on the basis of the prediction value of the integrated demand and the shape data.

5. The demand prediction system according to claim 4,
   wherein the processor is configured to
   calculate a correction value of the demand pattern data by multiplying a first parameter and adding a second parameter with respect to the prediction value of the demand pattern data, and
   calculate the shape data on the basis of the correction value of the demand pattern data and the prediction value of the number of consumers.

6. The demand prediction system according to claim 5,
   wherein the processor is configured to
   acquire a record value of the demand time series data, and

18

adjust the first parameter and the second parameter on the basis of the record value of the demand time series data and the prediction value of the demand time series data.

7. The demand prediction system according to claim 3,
wherein the processor is configured to
acquire the load data of each of the plurality of consumers in each measurement period,
classify the acquired load data to any one of a plurality of clusters of the measurement period, and
associate two or more clusters, the clusters being associated in different measurement periods and similar to each other, to one group to associate the plurality of clusters of each measurement period to the plurality of groups.

8. The demand prediction system according to claim 7,
wherein the processor is configured to
convert the acquired load data to a feature amount vector of a frequency domain, and
classify the feature amount vector to any one of the plurality of clusters of a corresponding measurement period.

9. The demand prediction system according to claim 8,
wherein the processor is configured to
calculate a record value of a representative feature amount vector which represents a feature amount vector corresponding to each group,
calculate a prediction value of the representative feature amount vector of each group in the prediction target period on the basis of the record value of the representative feature amount vector of the plurality of measurement periods, and
calculate the prediction value of the demand pattern data of each group on the basis of the prediction value of the representative feature amount vector.

10. The demand prediction system according to claim 4,
wherein the factor data indicates one or more of temperature, economy, consumer defection, and power saving,
wherein the processor is configured to
acquire a record value of a past integrated demand of the consumer set,
calculate an increase/decrease amount of demand on the basis of the factor data, and
calculate a prediction value of the integrated demand by adding the increase/decrease amount to the record value of the integrated demand.

11. The demand prediction system according to claim 4,
wherein the consumer set is any one of a consumer under a specific contract with respect to the resource demand and a consumer having a facility connected to a specific power distribution installation, and
wherein the storage device is configured to store consumer information which indicates the consumer set.

12. The demand prediction system according to claim 2,
wherein a length of each measurement period and a length of the prediction target period are predetermined measurement cycles.

13. The demand prediction system according to claim 2,
wherein the processor is configured to display the prediction value of the number of consumers in a display device.

14. A demand prediction method, comprising:

associating time-sequential load data of a resource demand of a plurality of consumers in a consumer set to a plurality of groups, and acquiring demand pattern data indicating a shape representing the load data in each group and the number of consumers belonging to each group; and
calculating shape data indicating a shape of the time-sequential load data of the demand of the consumer set in a predetermined prediction target period on the basis of a record value of the demand pattern data of each group and a record value of the number of consumers of each group.

# FIG. 1

DEMAND PREDICTION SYSTEM1

| 2 | 3 ECONOMIC INFORMATION MANAGER | 4 WEATHER INFORMATION MANAGER | 5 POWER TRANSMISSION/ DISTRIBUTION PROVIDER |
|---|---|---|---|

CONSUMER

| 20 | 30 | 40 | 50 |
|---|---|---|---|
| FACILITY CONTROL TERMINAL | ECONOMIC INFORMATION DISTRIBUTION TERMINAL | WEATHER INFORMATION DISTRIBUTION TERMINAL | METER DATA MANAGEMENT DEVICE |

7

6

RETAILER

| 60 | 61 | 62 | 63 |
|---|---|---|---|
| CONSUMER INFORMATION MANAGEMENT DEVICE | ANNUAL DEMAND ESTIMATION DEVICE | DEMAND SITUATION CLASSIFICATION DEVICE | PREDICTION CALCULATION DEVICE |

67

| DEMAND RECORD MANAGEMENT DEVICE | DEMAND PREDICTION VALUE USE DEVICE | INFORMATION INPUT/OUTPUT TERMINAL |
|---|---|---|

64                65                66

# FIG. 2

61

**ANNUAL DEMAND ESTIMATION DEVICE**

611

610

613

**CPU**

612

**STORAGE UNIT**

6102

6102A

**ANNUAL DEMAND ESTIMATION VALUE**

6101

**MEMORY**

**ANNUAL DEMAND ESTIMATION PROCESS**

614

**COMMUNICATION UNIT**

66

67

**INFORMATION INPUT/OUTPUT TERMINAL**

# FIG. 3

62

**DEMAND SITUATION CLASSIFICATION DEVICE**

620

621

623

**CPU**

622

**STORAGE UNIT**

6202

6202A

**CLUSTER INFORMATION**

6201

**MEMORY**

**CLUSTER ANALYSIS PROCESS**

6204

6204A

**GROUP INFORMATION**

6203

**GROUP GENERATION PROCESS**

624

**COMMUNICATION UNIT**

66

67

**INFORMATION INPUT/OUTPUT TERMINAL**

# FIG. 4

63

PREDICTION CALCULATION DEVICE

631

630

633

CPU

STORAGE UNIT

632

6306

6306A

MEMORY

TIME-SEQUENTIAL
DEMAND PREDICTION VALUE

6301 — CONSUMER NUMBER ANNUAL
CHANGE PREDICTION PROCESS

6302 — DEMAND SITUATION ANNUAL
CHANGE PREDICTION PROCESS

634

COMMUNICATION
UNIT

6303 — DEMAND SITUATION EXTENSION
CORRECTION PROCESS

6304 — DEMAND SITUATION
SYNTHESIS PROCESS

6305 — ANNUAL DEMAND ESTIMATION
VALUE DIVISION PROCESS

6307 — PARAMETER ADJUSTMENT
PROCESS

67

66

INFORMATION
INPUT/OUTPUT
TERMINAL

# *FIG. 5*

# FIG. 6

METER DATA INFORMATION                                        5001A

| METER ID | METER DATA |
|----------|------------|
| M000001 | {0.1kWh, 0.2kWh, ·····, 0.1kWh} |
| M000002 | {0.3kWh, 0.3kWh, ·····, 0.4kWh} |
| M000003 | {0.1kWh, 0.1kWh, ·····, 0.2kWh} |
| ... | ... |
| M152396 | {0.2kWh, 0.3kWh, ·····, 0.2kWh} |
| M152397 | {0.4kWh, 0.3kWh, ·····, 0.4kWh} |

5001A1                    5001A2

# FIG. 7

CONSUMER INFORMATION                                                      6001A

| CONSUMER ID | CONTRACT NAME | ADDRESS | BUSINESS TYPE | CONTRACT TYPE | METER ID |
|-------------|---------------|---------|---------------|---------------|----------|
| C000001 | SUZUKI TARO | TOKYO CHIYODA-KU | HOUSEHOLD | METER RATE LIGHTING B | M018704 |
| C000002 | YAMADA HANAKO | KANAGAWA-KEN YOKOHAMA-SHI | OFFICE | TIME ZONE RATE LIGHTING | M093534 |
| C000003 | TAKAHASHI JIRO | TOKYO SHINAGAWA-KU | HOUSEHOLD | TIME ZONE RATE LIGHTING | M133987 |
| ... | ... | ... | ... | ... | ... |
| C136142 | TANAKA SABURO | KANAGAWA-KEN KAWASAKI-SHI | HOUSEHOLD | METER RATE LIGHTING B | M107645 |
| C136253 | SATO SHIRO | TOKYO MINATO-KU | OFFICE | METER RATE LIGHTING B | M085754 |

6001A1      6001A2      6001A3      6001A4      6001A5      6001A6

# FIG. 8

CLUSTER INFORMATION

6202A

| FISCAL YEAR | CLUSTER ID | ITEM | VALUE |
|---|---|---|---|
| YEAR 2010 | 2010-1 | CLUSTER REPRESENTATIVE DEMAND PATTERN | {0.3, 0.2, · · · · · ·, 0.3} |
| | | CLUSTER BELONGING CONSUMER NUMBER | 200 HOUSES |
| | | CLUSTER BELONGING CONSUMER ID LIST | {C000001, C000006, · · ·, C125417} |
| | · · · | · · · | · · · |
| | 2010-23 | CLUSTER REPRESENTATIVE DEMAND PATTERN | {0.4, 0.5, · · · · · ·, 0.2} |
| | | CLUSTER BELONGING CONSUMER NUMBER | 50 HOUSES |
| | | CLUSTER BELONGING CONSUMER ID LIST | {C000002, C000008, · · ·, C130126} |
| YEAR 2011 | 2011-1 | CLUSTER REPRESENTATIVE DEMAND PATTERN | {0.3, 0.3, · · · · · ·, 0.2} |
| | | CLUSTER BELONGING CONSUMER NUMBER | 190 HOUSES |
| | | CLUSTER BELONGING CONSUMER ID LIST | {C000001, C000006, · · ·, C125417} |
| | · · · | · · · | · · · |
| | 2011-23 | CLUSTER REPRESENTATIVE DEMAND PATTERN | {0.2, 0.1, · · · · · ·, 0.2} |
| | | CLUSTER BELONGING CONSUMER NUMBER | 60 HOUSES |
| | | CLUSTER BELONGING CONSUMER ID LIST | {C000002, C000008, · · ·, C130126} |
| · · · | · · · | · · · | · · · |
| YEAR 2015 | 2015-1 | CLUSTER REPRESENTATIVE DEMAND PATTERN | {0.3, 0.3, · · · · · ·, 0.4} |
| | | CLUSTER BELONGING CONSUMER NUMBER | 210 HOUSES |
| | | CLUSTER BELONGING CONSUMER ID LIST | {C000001, C000006, · · ·, C125417} |
| | · · · | · · · | · · · |
| | 2015-22 | CLUSTER REPRESENTATIVE DEMAND PATTERN | {0.4, 0.5, · · · · · ·, 0.2} |
| | | CLUSTER BELONGING CONSUMER NUMBER | 40 HOUSES |
| | | CLUSTER BELONGING CONSUMER ID LIST | {C000002, C000008, · · ·, C130126} |

6202A1     6202A2          6202A3                    6202A4

# FIG. 9

GROUP INFORMATION

6204A

| GROUP ID | FISCAL YEAR | ITEM | VALUE |
|---|---|---|---|
| G01 | YEAR 2010 | CLUSTER REPRESENTATIVE DEMAND PATTERN | {0.3, 0.3, ······, 0.1} |
| | | CLUSTER BELONGING CONSUMER NUMBER | 320 HOUSES |
| | | CLUSTER BELONGING CONSUMER ID LIST | {2010-1, 2010-6, ···, 2010-21} |
| | ··· | ··· | ··· |
| | YEAR 2015 | CLUSTER REPRESENTATIVE DEMAND PATTERN | {0.3, 0.4, ······, 0.1} |
| | | CLUSTER BELONGING CONSUMER NUMBER | 280 HOUSES |
| | | CLUSTER BELONGING CONSUMER ID LIST | {2015-2, 2015-3, ···, 2015-19} |
| G02 | YEAR 2010 | CLUSTER REPRESENTATIVE DEMAND PATTERN | {0.4, 0.3, ······, 0.5} |
| | | CLUSTER BELONGING CONSUMER NUMBER | 290 HOUSES |
| | | CLUSTER BELONGING CONSUMER ID LIST | {2010-1, 2010-6, ···, 2010-21} |
| | ··· | ··· | ··· |
| | YEAR 2015 | CLUSTER REPRESENTATIVE DEMAND PATTERN | {0.2, 0.3, ······, 0.5} |
| | | CLUSTER BELONGING CONSUMER NUMBER | 300 HOUSES |
| | | CLUSTER BELONGING CONSUMER ID LIST | {2015-2, 2015-3, ···, 2015-19} |
| ··· | ··· | ··· | ··· |
| G20 | YEAR 2010 | CLUSTER REPRESENTATIVE DEMAND PATTERN | {0.3, 0.3, ······, 0.4} |
| | | CLUSTER BELONGING CONSUMER NUMBER | 80 HOUSES |
| | | CLUSTER BELONGING CONSUMER ID LIST | {2010-6} |
| | ··· | ··· | ··· |
| | YEAR 2015 | CLUSTER REPRESENTATIVE DEMAND PATTERN | {0.3, 0.3, ······, 0.5} |
| | | CLUSTER BELONGING CONSUMER NUMBER | 50 HOUSES |
| | | CLUSTER BELONGING CONSUMER ID LIST | {2015-3} |

6204A1     6204A2     6204A3     6204A4

# FIG. 10

ANNUAL DEMAND ESTIMATION PROCESS

START

SELECT ONE REFERENCE YEAR, AND ACQUIRE DEMAND RECORD INFORMATION, WEATHER INFORMATION, ECONOMIC INFORMATION, AND CONSUMER INFORMATION OF THAT YEAR — S1001

ACQUIRE WEATHER INFORMATION, ECONOMIC INFORMATION, CONSUMER INFORMATION OF PREDICTION TARGET YEAR — S1002

CALCULATE EXPECTATION VALUE OF DEMAND INCREASE/DECREASE BY TEMPERATURE INFLUENCE — S1003

CALCULATE EXPECTATION VALUE OF DEMAND INCREASE/DECREASE BY ECONOMIC INFLUENCE — S1004

CALCULATE EXPECTATION VALUE OF DEMAND INCREASE/DECREASE BY POWER SAVING INFLUENCE — S1005

CALCULATE EXPECTATION VALUE OF DEMAND INCREASE/DECREASE BY DEFECTION INFLUENCE — S1006

ADD EXPECTATION VALUE OF DEMAND INCREASE/DECREASE BY TEMPERATURE INFLUENCE, ECONOMIC INFLUENCE, POWER SAVING INFLUENCE, AND DEFECTION INFLUENCE TO DEMAND RECORD OF REFERENCE YEAR — S1007

END

# FIG. 11

CLUSTER ANALYSIS PROCESS

START

CLASSIFICATION PROCESS — S1101

CLUSTER NUMBER VALIDITY EVALUATION VALUE CALCULATION PROCESS — S1102

OPTIMAL CLUSTER NUMBER DETERMINATION PROCESS — S1103

END

# FIG. 12

## CLASSIFICATION PROCESS

START

S1201 — SELECT ONE CLUSTER NUMBER K

S1202 — DETERMINE INITIAL VALUE OF CLUSTER CENTER {Ck}

S1203 — NORMALIZE LOAD DATA OF EACH CONSUMER

S1204 — CALCULATE FEATURE AMOUNT Sm OF EACH CONSUMER

S1205 — SELECT ONE CONSUMER m

S1206 — CLASSIFY CONSUMER m INTO ONE CLUSTER

S1207 — ARE ALL CONSUMERS COMPLETED? — NO

YES

S1208 — UPDATE CLUSTER CENTER {Ck}

S1209 — IS CHANGE VALUE EQUAL TO OR MORE THAN CERTAIN VALUE? — YES

NO

S1210 — STORE CLUSTER CENTER {Ck} AND CLUSTER BELONGING CONSUMER ID LIST {Xk}

S1211 — ARE ALL CLUSTER NUMBER COMPLETED? — NO

YES

END

# FIG. 13

CLUSTER NUMBER VALIDITY EVALUATION VALUE CALCULATION PROCESS

```
                    START

            SELECT ONE CLUSTER NUMBER K          S1301

            CALCULATE ERROR IN CLUSTER           S1302

            CALCULATE IN-CLUSTER FITNESS E(K)     S1303

            CALCULATE BOUNDARY SURFACE g          S1304
            TO SEPARATE CLUSTER PAIR

        CALCULATE INTER-CLUSTER AVERAGE SEPARATION B(K)   S1305

                                            S1306
                ARE ALL CLUSTER NUMBER          NO
                    COMPLETED?
                        YES
                     END
```

# FIG. 14

OPTIMAL CLUSTER NUMBER DETERMINATION PROCESS

```
                    START

        DETERMINE FITNESS OPTIMAL CLUSTER NUMBER        S1401

        DETERMINE SEPARATION OPTIMAL CLUSTER NUMBER     S1402

        DETERMINE OPTIMAL CLUSTER NUMBER                S1403

        CREATE CLUSTER INFORMATION TABLE                S1404

                     END
```

# FIG. 15

# FIG. 16

## GROUP GENERATION PROCESS

```
                    START

SELECT TWO CONTINUOUS YEARS y AND y + 1        S1501

SELECT ONE CLUSTER i OF YEAR y                 S1502

SELECT ONE CLUSTER j OF YEAR y + 1             S1503

CALCULATE DISTANCE ΔSi,j BETWEEN
FEATURE AMOUNT VECTOR Si OF CLUSTER i AND      S1504
FEATURE AMOUNT VECTOR Sj OF CLUSTER j

        IS ΔSi,j EQUAL TO OR LESS              S1505      NO
             THAN THRESHOLD?

   YES     S1506                                  S1507

ASSIGN SAME GROUP ID TO          ASSIGN DIFFERENT GROUP ID
CLUSTER i AND CLUSTER j          TO CLUSTER i AND CLUSTER j

NO      ARE ALL CLUSTERS OF YEAR y + 1 COMPLETED?       S1508

                    YES

NO      ARE ALL CLUSTERS OF YEAR y COMPLETED?           S1509

                    YES

        ARE ALL YEARS COMPLETED?               S1510      NO

                    YES

CREATE GROUP INFORMATION TABLE                 S1511

                    END
```

# FIG. 17

YEAR 2011          YEAR 2012

GROUP G01

DEMAND PATTERN OF CLUSTER 2011-1          DEMAND PATTERN OF CLUSTER 2012-2

ASSOCIATION

GROUP G02

DEMAND PATTERN OF CLUSTER 2011-3          DEMAND PATTERN OF CLUSTER 2012-4

ASSOCIATION

GROUP G03

NARROWING SIMILAR SHAPE IN YEAR          NARROWING SIMILAR SHAPE IN YEAR

DEMAND PATTERN OF CLUSTER 2011-2          DEMAND PATTERN OF CLUSTER 2012-1

DEMAND PATTERN OF CLUSTER 2011-4    ASSOCIATION    DEMAND PATTERN OF CLUSTER 2012-3

INTEGRATION          INTEGRATION

# FIG. 18

CONSUMER NUMBER ANNUAL CHANGE PREDICTION PROCESS

START

SELECT ONE GROUP n — S1601

ACQUIRE RECORD NUMBER OF CONSUMERS OF GROUP n — S1602

ESTIMATE INDEX P OF TIME-SEQUENTIAL MODEL RELATED TO CONSUMER NUMBER OF GROUP n — S1603

ESTIMATE COEFFICIENT $\{a_p\}$ OF TIME-SEQUENTIAL MODEL RELATED TO CONSUMER NUMBER OF GROUP n — S1604

PREDICT FUTURE CONSUMER NUMBER OF GROUP n USING TIME-SEQUENTIAL MODEL RELATED TO CONSUMER NUMBER OF GROUP n — S1605

S1606

ARE ALL GROUPS COMPLETED? — NO

YES

END

# FIG. 19

PREDICT ANNUAL CHANGE OF CONSUMER NUMBER

CONSUMER NUMBER OF YEAR 2011

CONSUMER NUMBER OF YEAR 2012

CONSUMER NUMBER OF YEAR 2013

100 HOUSES

120 HOUSES

140 HOUSES

DEMAND PATTERN OF YEAR 2011 — SIMILAR — DEMAND PATTERN OF YEAR 2012 — SIMILAR — DEMAND PATTERN OF YEAR 2013

# FIG. 20

## DEMAND PATTERN ANNUAL CHANGE PREDICTION PROCESS

START

SELECT ONE GROUP n — S1701

ACQUIRE RECORD OF FEATURE AMOUNT VECTOR OF GROUP n — S1702

ESTIMATE INDEX Q OF TIME-SEQUENTIAL MODEL RELATED TO FEATURE AMOUNT VECTOR OF GROUP n — S1703

ESTIMATE COEFFICIENT $\{b_q\}$ OF TIME-SEQUENTIAL MODEL RELATED TO FEATURE AMOUNT VECTOR OF GROUP n — S1704

PREDICT FUTURE FEATURE AMOUNT VECTOR OF GROUP n USING TIME-SEQUENTIAL MODEL RELATED TO FEATURE AMOUNT VECTOR OF GROUP n — S1705

CONVERT FEATURE AMOUNT VECTOR OF GROUP n INTO DEMAND PATTERN BY INVERSE FOURIER TRANSFORMATION — S1706

ARE ALL GROUPS COMPLETED? — S1707 — NO

YES

END

# FIG. 21

DEMAND PATTERN OF YEAR 2011

DEMAND PATTERN OF YEAR 2012

DEMAND PATTERN OF YEAR 2013

CONVERSION TO FEATURE AMOUNT

CONVERSION TO FEATURE AMOUNT

INVERSE CONVERSION FROM FEATURE AMOUNT

FEATURE AMOUNT VECTOR OF YEAR 2011

FEATURE AMOUNT VECTOR OF YEAR 2012

FEATURE AMOUNT VECTOR OF YEAR 2013

PREDICT ANNUAL CHANGE OF FEATURE AMOUNT

## FIG. 22

DEMAND PATTERN EXTENSION CORRECTION PROCESS

```
                    START

            SELECT ONE GROUP n                    S1801

  MULTIPLY DEMAND PATTERN OF GROUP n BY COEFFICIENT αn    S1802

      ADD BIAS βn TO DEMAND PATTERN OF GROUP n     S1803

                                        S1804
            ARE ALL GROUPS COMPLETED?              NO

                    YES
                    END
```

## FIG. 23

DEMAND PATTERN SYNTHESIS PROCESS

```
                    START

            SELECT ONE GROUP n                    S1901

  MULTIPLY DEMAND PATTERN AND CONSUMER NUMBER OF GROUP n    S1902

                                        S1903
            ARE ALL GROUPS COMPLETED?              NO

                    YES
      ADD MULTIPLICATION RESULTS OF ALL GROUPS    S1904

                    END
```

# FIG. 24

PARAMETER ADJUSTMENT PROCESS

START

ACQUIRE DEMAND TIME-SEQUENTIAL PREDICTION VALUE — S2101

ACQUIRE DEMAND TIME-SEQUENTIAL RECORD VALUE — S2102

CALCULATE SQUARE ERROR $\varepsilon^2$ — S2103

CALCULATE PARTIAL DIFFERENCE RELATED TO PARAMETER OF SQUARE ERROR $\varepsilon^2$ — S2104

UPDATE PARAMETERS $\{\alpha_n\}, \{\beta_n\}$ — S2105

END

# FIG. 25

POWER DISTRIBUTION SUBSTATION

POLE TRANSFORMER A

CONSUMER #1   CONSUMER #3   ......   CONSUMER #19

CONSUMER #2   CONSUMER #4   ......   CONSUMER #20

POLE TRANSFORMER B

CONSUMER #21   CONSUMER #23   ......   CONSUMER #39

CONSUMER #22   CONSUMER #24   ......   CONSUMER #40

36

# FIG. 26

POWER

POWER RECORD AMOUNT PASSING
THROUGH POLE TRANSFORMER

POWER ESTIMATION AMOUNT
OBTAINED BY CORRECTING
AND ADDING DEMAND PATTERNS

ESTIMATION ERROR

APRIL    JUNE    AUGUST    OCTOBER    DECEMBER    FEBRUARY

# FIG. 27

DEMAND PATTERN OF GROUP 1    COEFFICIENT $\alpha_1$    BIAS $\beta_1$

DEMAND PATTERN OF GROUP 2    COEFFICIENT $\alpha_2$    BIAS $\beta_2$

POWER ESTIMATION AMOUNT
OBTAINED BY CORRECTING AND
ADDING DEMAND PATTERNS

DEMAND PATTERN OF GROUP N    COEFFICIENT $\alpha_N$    BIAS $\beta_N$

# FIG. 28

```
            ┌─────────────┐
            │    START    │
            └──────┬──────┘
                   │
                   ▼
┌────────────────────────────────────────────────┐
│      ACQUIRE POWER RECORD AMOUNT AT EVERY TIME   │──── S2201
│      OF PASSING THROUGH POLE TRANSFORMER         │
└────────────────────┬───────────────────────────┘
                     │
                     ▼
┌────────────────────────────────────────────────┐
│      ACQUIRE DEMAND PATTERN OF EACH GROUP        │──── S2202
└────────────────────┬───────────────────────────┘
                     │
                     ▼
┌────────────────────────────────────────────────┐
│  CORRECT EXTENSION OF DEMAND PATTERN OF EACH     │──── S2203
│  GROUP AND CALCULATE POWER ESTIMATION AMOUNT     │
│  AT EVERY TIME OF ADDING                         │
└────────────────────┬───────────────────────────┘
                     │
                     ▼
┌────────────────────────────────────────────────┐
│          CALCULATE ESTIMATION ERROR E            │──── S2204
└────────────────────┬───────────────────────────┘
                     │
                     ▼
┌────────────────────────────────────────────────┐
│  CALCULATE PARTIAL DIFFERENCE OF ESTIMATION      │──── S2205
│  ERROR E RELATED TO αn, βn, AND UPDATE αn, βn    │
│  BY STEEPEST DESCENT METHOD                      │
└────────────────────┬───────────────────────────┘
                     │
                     ▼
┌────────────────────────────────────────────────┐
│  PREDICT ANNUAL CHANGE OF DEMAND PATTERN OF      │──── S2206
│  EACH GROUP, CORRECT EXTENSION OF AND ADD        │
│  PREDICTED DEMAND PATTERN OF EACH GROUP USING    │
│  αn, βn, AND CALCULATE POWER PREDICTION          │
│  AMOUNT AT EVERY TIME                            │
└────────────────────┬───────────────────────────┘
                     │
                     ▼
            ┌─────────────┐
            │     END     │
            └─────────────┘
```

EP 3 460 742 A1

<table>
<tr><td colspan="2">INTERNATIONAL SEARCH REPORT</td><td>International application No.</td></tr>
<tr><td colspan="2"></td><td>PCT/JP2017/011638</td></tr>
</table>

**A. CLASSIFICATION OF SUBJECT MATTER**

*G06Q50/06*(2012.01)i, *G06F19/00*(2011.01)i, *H02J3/00*(2006.01)i, *H02J13/00* (2006.01)i

According to International Patent Classification (IPC) or to both national classification and IPC

**B. FIELDS SEARCHED**

Minimum documentation searched (classification system followed by classification symbols)
G06Q50/06, G06F19/00, H02J3/00, H02J13/00

Documentation searched other than minimum documentation to the extent that such documents are included in the fields searched
Jitsuyo Shinan Koho          1922–1996   Jitsuyo Shinan Toroku Koho   1996–2017
Kokai Jitsuyo Shinan Koho    1971–2017   Toroku Jitsuyo Shinan Koho   1994–2017

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>Y<br>A | JP 2015-132461 A  (National Institute of Advanced Industrial Science and Technology), 23 July 2015 (23.07.2015), paragraphs [0120] to [0122], [0156], [0182], [0217] to [0222]; fig. 22, 28, 32 (Family: none) | 1-4,10-14<br>5,6<br>7-9 |
| X<br>A | JP 2016-77051 A  (Toshiba Corp.), 12 May 2016 (12.05.2016), paragraphs [0013] to [0030], [0036] to [0040] (Family: none) | 1,14<br>2-13 |
| Y | JP 2016-19358 A  (Sumitomo Electric Industries, Ltd.), 01 February 2016 (01.02.2016), paragraphs [0094] to [0095]; fig. 8 (Family: none) | 5,6 |

☒ Further documents are listed in the continuation of Box C.   ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>24 April 2017 (24.04.17) | Date of mailing of the international search report<br>09 May 2017 (09.05.17) |
|---|---|
| Name and mailing address of the ISA/<br>Japan Patent Office<br>3-4-3,Kasumigaseki,Chiyoda-ku,<br>Tokyo 100-8915,Japan | Authorized officer<br><br>Telephone No. |

Form PCT/ISA/210 (second sheet) (January 2015)

39

**INTERNATIONAL SEARCH REPORT**

| International application No. |
| --- |
| PCT/JP2017/011638 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2015/133635 A1  (Hitachi, Ltd.),<br>11 September 2015 (11.09.2015),<br>paragraphs [0056] to [0092]; fig. 8 to 13<br>& US 2014/018038 A1      & EP 3115959 A1 | 1-14 |
| A | JP 2011-229374 A  (General Electric Co.),<br>10 November 2011 (10.11.2011),<br>entire text; all drawings<br>& US 2011/258018 A1      & EP 2378483 A1 | 1-14 |
| A | JP 2008-15921 A  (Mitsubishi Electric Corp.),<br>24 January 2008 (24.01.2008),<br>paragraphs [0008] to [0018]; fig. 1 to 3<br>(Family: none) | 1-14 |
| A | US 2013/0079938 A1  (LEE Simon et al.),<br>28 March 2013 (28.03.2013),<br>entire text; all drawings<br>(Family: none) | 1-14 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2004320963 A